# EUROPÄISCHE PATENTSCHRIFT

(11) **EP 0 657 281 B1**
(45) Veröffentlichungstag und Bekanntmachung des Hinweises auf die Patenterteilung: **27.03.2002**
(21) Anmeldenummer: 94118485.5
(22) Anmeldetag: 24.11.1994
(51) Int. Cl.: B32B 31/20, B32B 5/28, B29C 70/46, B29C 70/68, B29C 67/20

(54) **Mehrlagiges Bauelement**
Laminated building element
Elément de construction multicouche

(30) Priorität: 29.11.1993 AT 241793
(43) Veröffentlichungstag der Anmeldung: 14.06.1995
(73) Patentinhaber: Greiner Perfoam GmbH, 4550 Kremsmünster (AT)
(72) Erfinder: Eder, Bernhard, A-4020 Linz (AT)
(74) Vertreter: Secklehner, Günter, Dr.

(56) Entgegenhaltungen:
- EP-A- 0 179 938
- EP-A- 0 296 446
- EP-A- 0 350 807
- EP-A- 0 356 072
- EP-A- 0 393 476
- WO-A-85/05593
- WO-A-92/00177
- WO-A-92/05950
- DE-A- 2 014 359
- DE-A- 2 614 986
- FR-A- 2 318 022
- NL-A- 7 316 730
- US-A- 4 459 093
- US-A- 4 543 289
- PATENT ABSTRACTS OF JAPAN vol. 4, no. 125 (M-30) (607) 3. September 1980 & JP-A-55 082 615 (SEKISUI KAGAKU KOGYO K.K.) 21. Juni 1980

## Beschreibung

Die Erfindung betrifft ein mehrlagiges Bauelement, wie es im Oberbegriff des Patentanspruches 1 beschrieben ist, ein Verfahren und eine Vorrichtung zum Herstellen eines mehrlagigen Bauelementes, wie im Oberbegriff der Patentansprüche 20, 21 und 27 beschrieben sowie ein Verfahren zum Wiederaufbereiten eines mehrlagigen Bauelements wie es im Oberbegriff des Pantentanspruches 29 beschrieben ist.

Es ist bereits ein Verfahren zur Herstellung von Sandwichelementen bekannt - gemäß EP1 0 266 224 B1. Dieses Sandwichelement besteht aus einer Oberflächenlage, z.B. einem Geflecht oder Gewirke aus Polyester, Viskose, Glasfasern oder einer beliebigen Kombination davon, einer dahinter angeordneten ersten Verstärkungsschichte und einem thermisch verformten, zelligen Kernmaterial, einer zweiten Verstärkungslage und einer Decklage. Die Verbindung der einzelnen Schichten, insbesondere der Oberflächenlage mit dem Kernmaterial erfolgt mit einem Kleber, wobei in die Kleberschichte gleichzeitig die erste Verstärkungsschichte eingelegt wird und an dem Kernelement über eine weitere Kleberschichte die weitere Verstärkungsschichte befestigt wird. Die Herstellung dieses Sandwichelementes erfolgt in einem kontinuierlichen Produktionsprozeß, wobei die einzelnen Lagen teilweise von einer Rolle abgezogen und durch die Verarbeitungsmaschinen hindurchgeführt werden und die Formgebung sowie das Aktivieren der einzelnen Kleberschichten im Sandwichbauteil durch ein Form- und Präge- und gegebenenfalls Schnittwerkzeug im Zuge des kontinuierlichen Durchlaufes durch die Produktionsstraße erfolgt. Damit kann zwar die Herstellung derartiger Sandwichbauteile beschleunigt und vereinfacht werden, die erzielten Festigkeiten im Bereich der Deckschichten sind jedoch in vielen Bereichen nicht ausreichend.

Aus der EP 0 393 476 A ist ein sogenanntes "Prepreg" bestehend aus zwei Deckschichten aus einem Aggregat aus Glasfasern und einem thermoplastischen Binder sowie einer dazwischen angeordneten Zwischenschicht bekannt. Möglich ist auch die Anordnung einer zusätzlichen Deckschicht. Die Sandwichplatte wird derart hergestellt, daß das Aggregat aus Glasfasern und einem Kunststoffpulver bzw. einem filmartigen Binder auf eine Temperatur zwischen 120 °C und 200 °C erhitzt wird. Dadurch soll ein ausreichendes Durchtränken der Glasfasern ermöglicht werden, wodurch diese miteinander verbunden werden. Die Verbindung muß dabei nicht vollflächig erfolgen, sondern kann vielmehr auch punktweise stattfinden.

Aus der DE 20 14 359 A ist bekannt eine Matte mit einem Kunststoff, beispielsweise mit gelöstem Polystyrol, zu tränken. Daneben besteht die Möglichkeit, diese Matte mit einem Kunststoff in Granulatform unter Temperatureinwirkung "zu tränken".

Aus der EP 0 350 807 A ist bekannt einen Verstärkungsteil, der in Form von Fasermatten ausgestaltet sein kann, über einen thermoplastischen Binder an eine Kernschicht anzuformen.

Schließlich ist aus der WO 92/00177 A bekannt, einen Formteil aus vernetzten Reaktionskunststoffen herzustellen. Dazu werden die Reaktionskomponenten im flüssigen Zustand gemischt und dieses Gemisch auf eine Trägerbahn aufgetragen. Dieses Halbzeug wird nachfolgend unter Druck und bei erhöhter Temperatur zum Formteil umgeformt.

Der vorliegenden Erfindung liegt die Aufgabe zugrunde, ein mehrlagiges Bauelement zu schaffen, welches auch mit ausreichend eigensteifen Deckschichten versehen werden kann und welches nach dem Gebrauch einfach wieder in einzelne Materialschichten aufgelöst werden kann.

Diese Aufgabe der Erfindung wird durch die Merkmale im Kennzeichenteil des Patentanspruches 1 gelöst. Die überraschenden und nicht vorhersehbaren Vorteile dieser Lösung liegen darin, daß nunmehr ein thermoplastischer Kunststoff verwendet wird, der in einem Temperaturbereich verflüssigt werden kann, in welchen die den Kern bildende Schaumstoffschichte mit niederem Raumgewicht noch nicht ihre Festigkeit verliert bzw. bei welchen das Zellgerüst derartiger Schaumstoffe nicht zusammenbricht. Damit ist es möglich, einen weichen, elastischen, rückfedernden Kern aus Schaumkunststoffen, insbesondere auch aus Recyclingmaterial zu schaffen, der andererseits mit einer sehr harten tragfähigen Tragschichte beliebig einstellbarer Dicke innig verbunden werden kann. Dieser kann gleichzeitig durch den eingebrachten Tragkörper auf ein ausreichendes Festigkeitsniveau verstärkt werden. Damit ist es in einem Befestigungs- und Anformvorgang möglich, eine hoch tragfeste Deckschichte zu schaffen. Der weitere Vorteil liegt aber darin, daß durch die Verwendung des thermoplastischen Kunststoffmaterials bei einer Wiederverarbeitung bzw. bei einer Aufarbeitung der Altstoffe die Trennung des Tragkörpers und der Deckschichte von der Schichte aus thermoplastischem Kunststoff in einfacher Weise durch eine entsprechend starke Erhitzung der Deckschichten und einer Wiederverflüssigung des thermoplastischen Kunststoffes erzielt werden kann. Dies schafft nunmehr die Möglichkeit, daß zuerst der Tragkörper von dem, meist aus Kunststoff gebildeten Kernmaterial vollständig gelöst wird, in dem z.B. vor einem vollständigen Verflüssigen, also im zähplastischen Zustand das thermoplastischen Kunststoffmaterial abgehoben wird, wogegen dann durch weitere Erhitzung und vollständige Verflüssigung des thermoplastischen Kunststoffmaterials dieses auch aus dem Tragkörper zur Gänze entfernt und zur Wiederverwendung aufbereitet werden kann. Damit ist im Sinne der geplanten Altstofftrennung die Möglichkeit geschaffen, bei einem Sandwichbauteil die einzelnen Schichten wieder völlig voneinander zu trennen, wodurch eine vereinfachte Entsorgung und vor allem auch eine wesentlich einfachere Wiederverwertung der Altstoffe erzielbar ist. Dazu kommt, daß durch einen speziellen Aufbau eines derartigen Bauelementes zwei, über einen elastisch verformbaren, bevorzugt rückstellbaren Kern verbundene Deckschichten geschaffen werden, die sich mit großem Vorteil zur Dämpfung von Schallwellen oder Aufprallbewegungen, z.B. des Körperschalles, wie er in Kraftfahrzeugen auftritt, aber natürlich auch von Luftschall eignen. Dies ist dadurch möglich, daß das Bauelement im Bereich einer der beiden Deckschichten mit Befestigungselementen, z.B. an der Karosserie eines Fahrzeuges befestigt werden kann, während die dem Fahrgastraum zugewandte andere Deckschichte, dadurch freischwingend gelagert ist und so die Körperschallübertragung von der Karosserie in den Innenraum des Fahrzeuges gedämpft wird. Durch eine entsprechende Gestaltung der dem Fahrgastraum zugewandten Deckschichte ist es dadurch möglich, daß diese eine ausreichende Festigkeit aufweist, um eine Zerstörung im Zuge der normalen Benutzung zu verhindern und andererseits doch einen entsprechenden Aufprallschutz mit einstellbaren Grenzwerten bildet, der eine Verletzung der Benutzer bei einem Unfall möglichst verhindert. Durch die Möglichkeit der Anordnung von weiteren Decklagen - außer den Deckschichten - aus den unterschiedlichsten Materialien wie z.B. Kunststoffolien, Textilien und dgl. ist es auch durch die Wahl der entsprechenden Stoffe ohne weiteres möglich, eine ausreichende Luftschalldämmung durch die Ausbildung des Bauelementes zu erzielen. Vorteilhaft ist dabei weiters, daß eine Entsorgung derartiger Bauelemente relativ einfach möglich ist, da die Struktur des Kerns, auch wenn dieser aus Schaumkunststoffen besteht, während der Trennung nicht zerstört wird und somit auch die Schaumkunststoffe nach einem entsprechenden Zerreißen und Aufarbeiten wieder als Flocken für die Herstellung eines neuen Bauelementes herangezogen werden können.

Vorteilhaft ist auch eine Ausgestaltung nach Patentanspruch 2, da dadurch entsprechend dem verwendeten Recyclingmaterial bei der Entsorgung von Altmaterialien auch eine einfache Bestimmung des Raumgewichtes und des Dämpfungsverhaltens sowie der Festigkeit der Bauelemente möglich ist.

Durch die Weiterbildung nach Patentanspruch 3 wird in Verbindung mit dem Aufbringen der Deckschichte auf dem Bauelement auch eine Verarbeitung von mit harten oder halbharten Beschichtungen versehenen Altkunststoffen ermöglicht, da sich die härten Bestandteile der Beschichtungen nicht durch die Deckschichten durchdrücken und dadurch keine Oberflächenverschlechterungen nach sich ziehen können.

Eine innige Verbindung der Recyclingmaterialien bzw. der Flocken aus Kunststoffschaum kann durch die Ausführungsvariante nach Patentanspruch 4 erreicht werden, wodurch auch weiters, vor allem bei Verwendung von Flocken aus Recyclingmaterial der Primärmaterialanteil für die Herstellung des Kerns sehr gering gehalten werden kann.

Durch die weitere Ausbildung nach Patentanspruch 5 wird mit Vorteil eine feste Einbettung der Flocken in den Kern und trotzdem noch eine geringe anteilsmäßige Steigerung des Raumgewichts erreicht.

Vorteilhaft ist auch eine Ausgestaltung nach Patentanspruch 6, da dadurch neben einer ausreichenden Festigkeit eine noch zufriedenstellende Elastizität zur Schwingungsdämpfung zwischen den beiden Deckschichten erreicht wird.

Die Ausführungsvariante nach Patentanspruch 7 ermöglicht die Herstellung eines ausreichend dichten Zellgerüstes, um die einzelnen Flocken aus Schaumkunststoff in einem Traggerüst einzubetten, sodaß die Tragfunktion des Kerns als Verbindungsmittel zwischen den beiden Deckschichten auch bei höheren Belastungen verwendet werden kann.

Durch die Ausbildung nach Patentanspruch 8 kann den beim Einsatz auftretenden Belastungen in einfacher Weise entsprochen werden, und es können auch durch die Wahl der elastischen Eigenschaften die Schalldämmwerte des Kerns einfach an unterschiedliche Anwendungsfälle angepaßt werden.

Durch die Anpassung des verwendeten Thermoplastes gemäß Patentanspruch 9 kann eine universelle Abstimmung der Bauelemente auf unterschiedliche Einsatzfälle erfolgen.

Die vielfältigen Ausbildungsmöglichkeiten der Deckschichte, die eine universelle Einsetzbarkeit derartig hergestellter Bauelemente in den verschiedensten Bereichen der Schalldämmung, z.B. der Innenverkleidung von Fahrzeugen, im Baubereich und dgl. ermöglicht, zeigen die Merkmale im Patentanspruch 10.

Durch die Ausgestaltung nach Patentanspruch 11 wird ein gutes Anhaften der thermoplastischen Schichte an dem Tragkörper erreicht, wodurch eine intensive und hochfeste Verbindung zwischen dem Tragkörper und der thermoplastischen Schichte erzielbar ist.

Durch die Weiterbildung nach Patenanspruch 12 ist es möglich, den thermoplastischen Kunststoff zur Formgebung bzw. zur Einbettung des Tragkörpers heranzuziehen, ohne daß die Temperaturen überschritten werden, die zu einer nachteiligen Veränderung bzw. einem Cracken oder einem Ausölen der Zellstruktur des Kerns führen.

Vorteilhaft ist weiters auch die Ausgestaltung nach Patentanspruch 13, da der thermoplastische Kunststoff neben der Herstellung der ausreichend starken Deckschichte auch gleich ein vollflächiges Verbinden und Aufbringen einer Decklage ermöglicht, ohne daß eine zusätzliche Kleberschichte aufgebracht werden muß.

Vorteilhaft ist auch eine Ausführungsvariante nach Patentanspruch 14, da dadurch auch Befestigungsmöglichkeiten geschaffen werden, die höhere Ausreißfestigkeiten erlauben bzw. eine bessere Krafteinleitung als die Verwendung der Tragelemente als Befestigungselemente.

Als vorteilhaft hat sich auch eine Weiterbildung nach Patentanspruch 15 erwiesen, da dadurch auf bereits vorgefertigte Bauelemente vor dem Aufbringen von Deckschichten noch Verstärkungselemente in unterschiedlichen Oberflächenbereichen, wo diese benötigt werden, aufgebracht werden können.

Vorteilhafte Weiterbildungen für das Tragelement sind in den Patentanprüchen 16 bis 19 beschrieben, da dadurch ein vliesartiger Aufbau erreicht wird, welcher einfach herzustellen und zu bearbeiten ist und trotz der losen Einbettung der Langfäden eine ausreichende Versteifung als Tragkörper erreicht wird. Ebenfalls wir dadurch auch eine gute Verbindung zwischen den Decklagen und dem Schaumstoff des Kerns erreicht.

Die Erfindung umfaßt weiters auch ein Verfahren zur Herstellung eines mehrlagigen Bauelementes, wie dies im Oberbegriff des Patentanspruches 20 beschrieben ist.

Dieses Verfahren ist durch die Maßnahmen im Kennzeichenteil des Patentanspruches 20 gekennzeichnet. Durch diese Art der Herstellung ist es nunmehr möglich, eine Taktproduktion für Großserien derartiger Bauelemente einfach durchzuführen, wobei das Handling zur Herstellung der Bauelemente bei den einzelnen Bauteilen erheblich vereinfacht werden kann. Dazu kommt, daß nunmehr einige der verwendeten Materialien direkt von der Rolle weg verarbeitet werden können und vielfach der Auftrag von flüssigen Komponenten, insbesondere von mit Lösungsmitteln versetzten Klebern und dgl., nicht mehr benötigt wird. Dazu kommt, daß mit geringfügigen Abweichungen im Produktionsablauf Bauelemente für die unterschiedlichsten Anforderungen nach dem gleichen System hergestellt werden können.

Die Erfindung umfaßt weiters auch ein Verfahren zur Herstellung eines mehrlagigen Bauelementes, wie dies im Oberbegriff des Patentanspruches 21 beschrieben ist.

Dieses Verfahren ist durch die Maßnahmen im Kennzeichenteil des Patentanspruches 21 gekennzeichnet. Vorteilhaft ist dabei, daß durch die Ausgestaltung der Deckschichte als Wirrlagevlies aus Fäden mit darin eingearbeiteten Einlagefäden eine Verkürzung des Herstellverfahrens des mehrlagigen Bauelementes erreicht werden kann, da die Deckschicht aus den thermoplastischen Kunststofffäden durch aufschmelzen letzterer erzeugt wird. Es ist damit auch eine entsprechende Lagerbewirtschaftung für Halbfertigfabrikate möglich, da das Wirrlagevlies bis zum Verbrauch einfach als Rollenware gelagert werden kann. Zudem kann damit mit einfachen Mitteln eine gute Verteilung der für die Verstärkung der Deckschicht vorgesehenen Einlagefäden erreicht werden.

Durch die Maßnahmen nach Patentanspruch 22 wird erreicht, daß auch eine räumliche Formgebung des Elementes unter Ausnutzung der Temperatur, die für das Verflüssigen des thermoplastischen Kunststoffes notwendig ist, erfolgen kann, wobei es auch möglich ist, eine unterschiedliche Raumform durch unterschiedlich starke Verdichtung des Kerns, insbesondere von Kunststoffschaumelementen im Kern, sicherzustellen, ohne daß das Zellgerüst des Kerns thermisch verformt bzw. gecrackt werden muß, da nur durch das Zusammenpressen von elastischen Kernmaterialien diese, durch die Erstarrung der Deckschichte aus thermoplastischem Material in dem vorgespannten Zustand sprichwörtlich eingefroren werden und damit ihre Elastizitätseigenschaften trotz der höheren Dichte und des Raumgewichtes nicht zerstört und ausgeschaltet werden. Damit sind die Dämpfungseigenschaften derartiger Bauelemente, insbesondere bei der Schalldämmung als sehr gut zu bewerten.

Eine noch stärkere räumliche Verformung und gegebenenfalls teilweise Verfestigung der Zellstruktur des Kerns ist durch das Vorgehen nach Patentanspruch 23 erzielbar. Dadurch ist es unter anderem auch in einzelnen Fällen möglich, daß zur räumlichen Verformung des Bauelementes geringere erforderlich sind.

Die Maßnahmen nach Patentanspruch 24 ermöglichen ein Verfestigen des Bauelementes z.B. in Befestigungsbereichen, sodaß diese nahezu die Struktur eines Vollmaterialbauteils mit den Vorteilen einer Sandwichkonstruktion erhalten.

Durch die Verwendung eines Kunststoffes gemäß Patentanspruch 25 und der entsprechenden Erwärmung wird es möglich, eine Fülle von unterschiedlichen Materialien für den Kern einzusetzen, ohne daß diese ihre mechanischen oder chemischen Eigenschaften verlieren.

Vorteilhaft ist aber auch ein Vorgehen nach Patentanspruch 26, da in einem Arbeitsvorgang mit einer für die mechanischen Eigenschaften des Bauelementes benötigten Tragschichte gleichzeitig die Verbindung zu den unterschiedlichsten Decklagen hergestellt werden kann.

Die Erfindung umfaßt weiters eine Vorrichtung, wie sie im Oberbegriff des Patentanspruches 27 beschrieben ist.

Diese Vorrichtung wird durch die Merkmale im Kennzeichenteil des Patentanspruches 27 gekennzeichnet. Vorteilhaft ist dabei, daß nunmehr ein Inline-Verfahren geschaffen werden kann, bei dem vor allen dann, wenn der gleiche Tragkörper für die beiden Deckschichten verwendet wird, mit einer Fertigungsanlage für das Zuführen der Decklagen und das Einbringen des thermoplastischen Kunststoffes die Herstellung des Bauelementes zu ermöglichen. Dadurch ist es aber auch möglich, daß im Anschluß an das Zubringen der Deckschichte mehrere Formwerkzeuge vorgesehen werden können, die von einer kontinuierlichen Beschickungsanlage abwechselnd beschickt werden können, wodurch der Ausstoß einer derartigen Fertigungsvorrichtung erheblich erhöht werden kann.

Es ist aber auch eine Ausbildung der Vorrichtung nach Patentanspruch 28 von Vorteil, da dadurch die einzelnen Decklagen während des Form- und Verformungsvorganges und dem Aushärten in einer exakten Position gehalten werden könne, wobei ein Verlegen dieser Vakuumschlitze dadurch verhindert werden kann, daß nach dem Zusammenpressen und Positionieren der Deckschichten und des Kerns in der Form über diese Vakuumsschlitze gegebenenfalls Luft zur Kühlung für die rasche Erstarrung des Formteils zugeführt werden kann.

Die Erfindung umfaßt weiters ein Verfahren, wie es im Oberbegriff des Patentanspruches 29 beschrieben ist.

Dieses Verfahren wird durch die Merkmale im Kennzeichenteil des Patentanspruches 29 gekennzeichnet.Vorteilhaft ist dabei, daß durch diese Maßnahmen in einfacher Weise ein getrenntes Entsorgen der einzelnen Lagen bzw. Schichten des Bauelementes sichergestellt werden kann.

Schließlich ist bei der Ausführungsvariante gemäß Patentanspruch 30 von Vorteil, daß dadurch der thermoplastische Kunststoff nahezu zur Gänze aus dem Tragkörper entfernt werden kann.

Die Erfindung wird im nachfolgenden anhand der in den Zeichnungen angeführten Ausführungsbeispiele näher erläutert.

Es zeigen:
- Fig. 1: ein erfindungsgemäß ausgestattetes mehrlagiges Bauelement mit einem Kern aus einem Schaumstoffelement in perspektivischer Ansicht, geschnitten und stark vergrößerter schematischer Darstellung;
- Fig. 2: das Bauelement nach Fig. 1 räumlich verformt in Seitenansicht und vereinfachter schematischer Darstellung;
- Fig. 3: ein anderes erfindungsgemäß ausgestattetes mehrlagiges Bauelement in Stirnansicht, geschnitten und vereinfachter schematischer Darstellung;
- Fig. 4: eine andere Ausführungsvariante eines erfindungsgemäßen mehrlagigen Bauelementes in Seitenansicht, geschnitten und vereinfachter schematischer Darstellung;
- Fig. 5: eine Vorrichtung zur Herstellung eines erfindungsgemäßen mehrlagigen Bauelementes in Seitenansicht und vereinfachter schematischer Darstellung;
- Fig. 6: eine andere Ausführungsform eines Tragelements in perspektivisch vereinfachter schematischer Darstellung;
- Fig. 7: ein erfindungsgemäß ausgestattetes mehrlagiges Bauelement mit einem Kern aus Schaumkunststoff und dem Tragelement nach Fig. 6 in perspektivischer Ansicht, geschnitten und stark vergrößerter schematischer Darstellung.

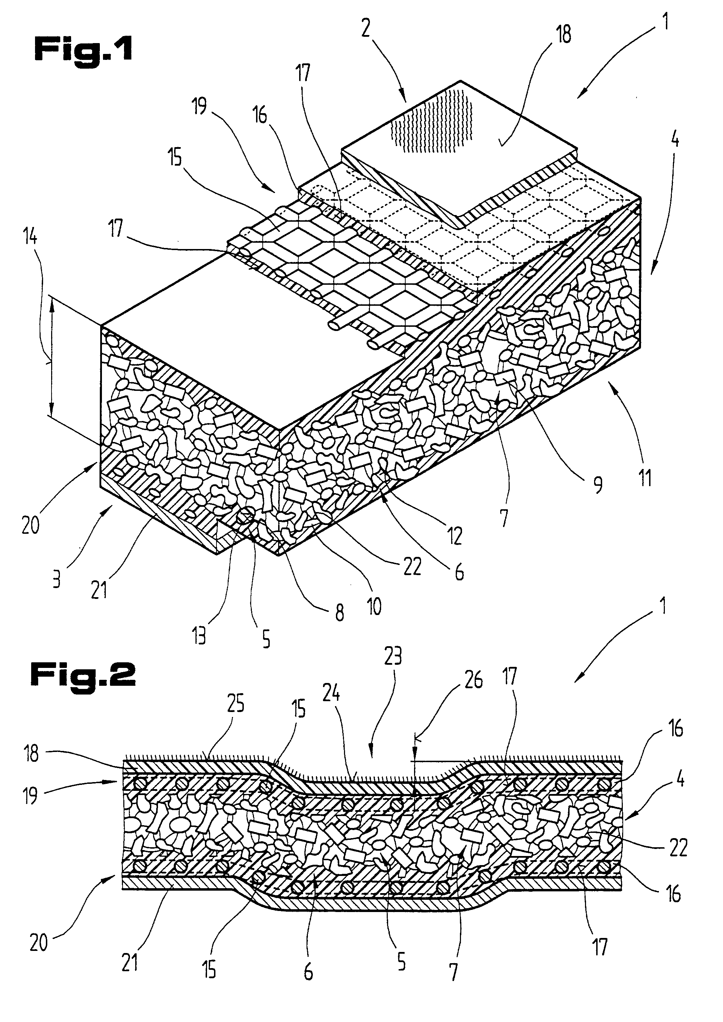

In Fig. 1 ist ein mehrlagiges Bauelement 1 gezeigt, welches aus zwei Deckschichten 2,3 besteht, zwischen welchen ein Kern 4 angeordnet ist. Es ist aber auch selbstverständlich möglich, nur eine der beiden Deckschichten 2,3 am Kern 4 anzuordnen.

Der Kern 4 besteht aus Flocken 5,6,7 aus Hart-, Mittelhart- und/oder Weichschäumen, gegebenenfalls mit Kaschierungen aus unterschiedlichen Materialien 8,9, die über einen Kunststoffschaum 10, beispielsweise Polyurethan- oder Polyäthylenschaum, Polyetherschaum oder dgl. aus Primärmaterial, der weiche und/oder mittelharte und/oder harte Konsistenz aufweisen kann, zu einer Einzelplatte 11 oder einem Block, aus dem vorzugsweise durch Zuschneiden die Einzelplatten 11 herstellbar sind, verbunden sind. Zwischen 70 % und 90 %, bevorzugt 85% des Volumens dieses Kerns 4 werden durch die Flocken 5,6,7 aus Kunststoffschaum 12,13 und 10 % bis 20 % des Gewichtes durch den Kunststoffschaum 10 aus Primärmaterial gebildet. Die Flocken 5,6,7 aus Kunststoffschaum 12,13 weisen ein Raumgewicht zwischen 20 kg/m³ und 250 kg/m³ bevorzugt 50 kg/m³ bis 150 kg/m³ auf. Das Raumgewicht des aus einem Primärmaterial hergestellten Kunststoffschaums 10 beträgt zwischen 700 kg/m³ und 1300 kg/m³, bevorzugt zwischen 800 kg/m³ und 1200 kg/m³ und ist bevorzugt halbsteif bzw halbhart Der Kern 4 ist durch eine Einzelplatte 11 vorgegebener Dicke 14 gebildet, die bevorzugt durch Zerschneiden eines Schaumstoffblockes hergestellt wird. Es ist aber auch selbstverständlich möglich, die Einzelplatte 11 nur aus Primärmaterial des Kunststoffschaumes 10 bzw. anstelle der Flocken 5,6,7 aus Kunststoffschaum 12,13 jegliche andere Werkstoffe wie z.B. Textil, Kork, Holz, Natur- und Kunstsubstanzen zu verwenden.

Die beiden Deckschichten 2,3 werden durch einen faser- bzw. fadenförmigen Tragkörper 15 aus Natur- und/oder Kunstmaterialen, z.B. ein Netz, Gewirke, Gewebe, Geflecht, Gitter oder Vlies aus Fasern bzw. Fäden aus Glas, Metall, Kevlar, Graphit oder Textil gebildet, der in eine Schichte 16 aus thermoplastischem Kunststoff 17 eingebettet ist, welche am Kern 4 angeformt ist. Der thermoplastische Kunststoff 17 wird durch den faser- bzw. fadenförmigen Tragkörper 15 verstärkt und übernimmt gleichzeitig die kraft- und/oder formschlüssige Verbindung zwischen dem Tragkörper 15 und dem Kern 4. Diese Schichte 16 aus thermoplastischerm Kunststoff 17 kann auch z.B. durch eine Wirrlage aus einzelnen Fasern bzw. Fäden gebildet sein, welche bei Druck- und/oder Temperaturbelastung ineinander verschmelzen und so den Tragkörper 15 in sich einbetten.

Wie weiters im Bereich der Deckschichte 2 schematisch angedeutet ist, ist es auch möglich über die Schichte 16 aus dem thermoplastischen Kunststoff 17 wie z.B. Polypropylen gleichzeitig auch eine Decklage 18, z.B. einen Stoff, ein Gewirke, Gewebe, einen Teppich oder ein Vlies anzuformen. Als besonders vorteilhaft hat sich eine Polyurethanfolie oder -platte oder ein Baumwollfaservlies erwiesen, wodurch insbesondere die Schalldämmeigenschaften verbessert werden können. Als Werkstoff für den Tragkörper 15 kann aber auch Polyurethan verwendet werden.

Damit bildet die Schichte 16 aus thermoplastischem Kunststoff 17 nicht nur ein durch den Tragkörper 15 verstärktes Tragelement 19, sondern ist gleichzeitig auch die Verbindungsschichte zwischen dem Kern 4, dem Tragkörper 15 und gegebenenfalls der weiteren Decklage 18.

Ein besonderer Vorteil eines derart ausgebildeten Bauelementes 1 liegt aber vor allem darin, daß zumindest eine harte, widerstandsfähige Deckschichte 2 bzw. dessen Tragelement 19 und gegebenenfalls die Decklage 18 von der weiteren Deckschichte 3 bzw. deren Tragelement 20 oder einer Decklage 21 elastisch gedämpft über die Flocken 5,6,7 aus Kunststoffschaum 12,13 des Kerns 4 distanziert ist. Damit können diese beiden Deckschichten 2,3 unabhängig voneinander schwingen, und es kann dadurch eine gute Schalldämmung erreicht werden, wie sie vor allem im Kraftfahrzeugwesen bzw. bei Raumtrennwänden oder dgl. mit besonderem Vorteil z.B. für die Körperschalldämmung einsetzbar ist. Um den Kunststoff 17 des Tragelements von dem Tragkörper 15 zu entfernen, ist es z.B. möglich, diesen auf eine Temperatur von über 200° Celsius zu erwärmen und ihn anschließend vom Tragkörper 15 abzusaugen.

Der Vorteil liegt vor allem darin, daß durch die widerstandsfähigen Deckschichten 2,3 unter Verwendung der mit dem Tragkörper 15 verstärkten Schichte 16 aus thermoplastischem Kunststoff 17 eine hohe Oberflächen- und/oder Kantendruckfestigkeit erreicht wird und andererseits das Gesamtgewicht derartiger Bauelemente 1 durch das geringe Raumgewicht des Kerns 4 gering gehalten werden kann.

Selbst wenn es im Zuge der Erwärmung bei der Anformung der Schichte 16 aus thermoplastischem Kunststoff 17 an den Kern 4, z.B. in dessen Oberflächenschichten, zu einem Erweichen eines Zellgerüstes 22 bzw. zu einem Verformen bzw. Zusammenpressen des Zellgerüstes 22 kommen sollte, wird dadurch das gesamte Raumgewicht des Kerns 4 nur geringfügig verändert, sodaß die Vorteile der direkten Verbindung über diese Schichte 16 aus thermoplastischem Kunststoff 17 den geringfügigen Nachteil einer etwaigen Raumgewichtserhöhung des Kerns 4 bei weitem übersteigen. Dies kann z.B. durch ein thermisches Cracken erfolgen.

Für diesen thermoplastischen Kunststoff 17 können selbstverständlich die unterschiedlichsten Materialien, wie z.B. Polyäthylen, Polyamid, Polypropylen, Polystyrol, ABS, Polyvinylchlorid, Polyimid oder ein sonstiges Thermoplast, welches bei Temperaturen um zumindest 120° bis 180°, bevorzugt 170° Celsius zähplastisch bzw. flüssig ist, verwendet werden. Die Art, wie der thermoplastische Kunststoff 17 auf den Tragkörper 15 bzw. den Kern 4 aufgebracht wird, ist im Rahmen der Erfindung frei wählbar. Er kann entweder in pastenförmiger Konsistenz bzw. Granulat auf den bevorzugt von einer Rolle ablaufenden Tragkörper 15 aufgetragen oder in nahezu flüssiger Konsistenz aufgespritzt werden, die bei Raumtemperatur nur gering haftend sind. Es ist aber auch möglich ihn in Pulverform auf den Tragkörper 15 aufzutragen bzw. in Art einer Vorbeschichtung aufzubringen oder als Folie bzw. Vlies einseitig oder beidseitig auf den Tragkörper 15 aufzulegen bzw. diesen in den Kunststoff 17 einzubetten.

In Fig. 2 ist ein mehrlagiges Bauelement 1 gezeigt, welches zumindest in einer Ebene räumlich verformt ist. Dieses Bauelement 1 besteht ähnlich wie das in Fig. 1 beschriebene aus einem Kern 4, der entsprechend den Ausführungen zu Fig. 1 hergestellt ist, auf dem auf den beiden voneinander abgewendeten Oberflächen Tragelemente 19, 20 angeordnet sind, über die der Kern 4 mit zusätzlichen Decklagen 18 bzw. 21 angeformt ist. Die Tragelemente 19, 20 bestehen jeweils aus einem Tragkörper 15, der wiederum als Netz, Gewirke, Gewebe, Gitter, Fäden, Fasern oder Vlies oder Ähnlichem aus den bereits zuvor beschriebenen Materialien gebildet sein kann, welches in eine Schichte 16 aus thermoplastischem Kunststoff 17 eingebettet ist. Wie dieser Darstellung in Fig. 2 weiters zu entnehmen ist, ist eine Dichte des Kerns 4 bzw. der Flocken 5,6,7 über den gesamten Querschnitt des Kerns 4 trotz der räumlichen Durchsetzung 23, die durch eine Versetzung eines Oberflächenteils 24 gegenüber dem benachbarten Oberflächenteil 25 um eine Tiefe 26 gebildet wird, gleich hoch.

Eine solche Ausbildung des Bauelementes 1 wird dadurch ermöglicht, daß die Verformung des Kerns 4 sowie der beiden Tragelemente 19, 20 dann erfolgt, während der thermoplastische Kunststoff 17 der Schichte 16 plastifiziert, also sich in einem plastischen bzw. verflüssigten Zustand befindet, worauf die Form des Bauelementes 1 durch entsprechend diesen zugeordneten Formflächen solange aufrechterhalten wird, bis die Schichte 16 aus thermoplastischem Kunststoff 17 soweit abgekühlt ist, daß sie eine Eigenstabilität aufweist und somit den Kern 4 im Bereich der Durchsetzung 23 in der in Fig. 2 gezeigten Position festhält.

Durch diese Art des Aufbaus der Bauelemente 1 bzw. deren Herstellungsverfahren ist es daher möglich, Bauelemente 1 mit den unterschiedlichsten Raumformen, beispielsweise die auch sphärisch gekrümmte Teile oder Freiformflächen aufweisen, herzustellen, wobei dies ohne eine thermische Verformung des Zellgerüstes 22, beispielsweise durch entsprechend starke Erhitzung des Kernes 4 möglich ist und somit die elastischen Eigenschaften des Kerns 4, insbesondere im Hinblick auf eine dadurch erzielte Schalldämmung oder einen Aufprallschutz, einfach beibehalten werden kann.

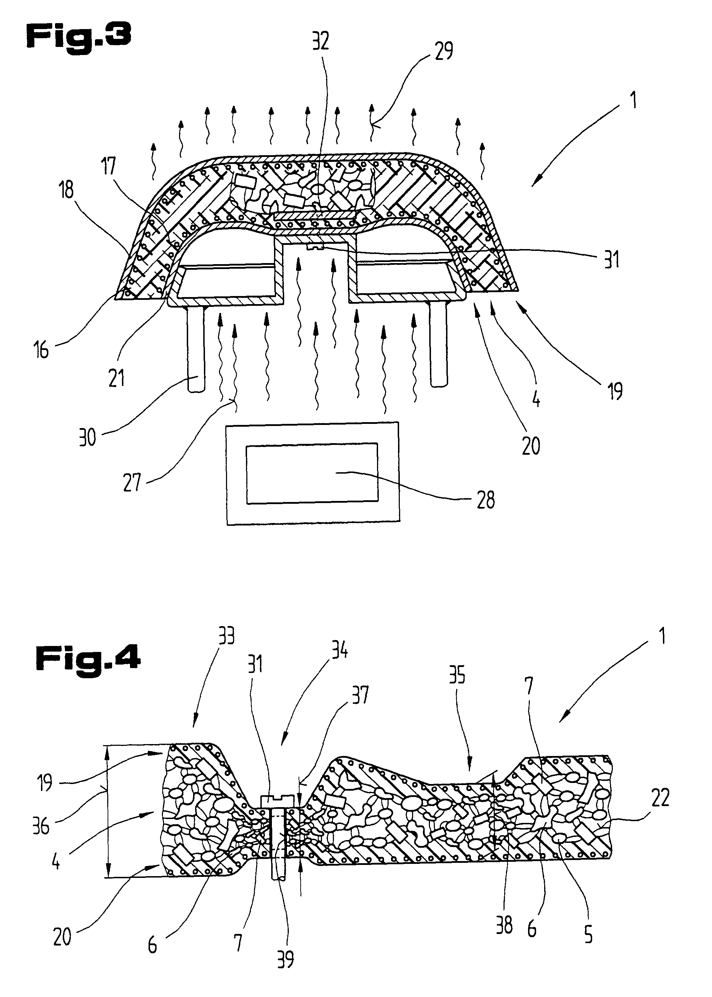

In Fig. 3 ist eine Ausführungsform gezeigt, bei der das Bauelement 1 durch einen Körper mit Freiformflächen gebildet ist. So ist dieser beispielsweise in allen drei Raumrichtungen verformt und weist im Bereich beider Oberflächen des Kerns 4 Tragelemente 19, 20 auf, die entsprechend den Ausführungen in den Fig. 1 und 2 ausgebildet sein können.

In diesem Fall sind auch auf beiden Tragelementen 19, 20 Decklagen 18 bzw. 21 angeordnet. Die Decklage 18 kann dabei beispielsweise durch eine Polyurethanfolie oder eine sonstige für Verkleidungsoberflächen in Fahrzeugen, beispielsweise bei Armaturenbretter verwendete Oberflächenlage gebildet sein, während die Decklage 21 durch eine Polyurethanfolie oder -platte oder ein Baumwollfaservlies gebildet sein kann, um beispielsweise die schematisch durch Pfeile 27 angedeuteten Schallwellen, die von einem Motor 28 ausgehen, zu dämmen, sodaß der Schalleintritt in den Innenraum eines Fahrzeuges, wie symbolisch durch verkleinerte Pfeile 29 angedeutet ist, zu verringern. Das Bauelement 1, welches beispielsweise durch ein Armaturenbrett gebildet sein kann, ist zudem beispielsweise auf einem Fahrzeugrahmen 30 mittels Befestigungsmittel 31, wie z.B. Schrauben oder Nieten, befestigt.

In diesem Ausführungsbeispiel ist als Variante gezeigt, daß dann, wenn beispielsweise die Ausreißfestigkeit eines Befestigungsmittels 31 in den Tragelementen 19, 20 für die Befestigung des Bauelementes 1 nicht ausreicht, beispielsweise zwischen den Tragelementen 19 und/oder 20 ein Verstärkungselement 32 angeordnet werden kann. Bevorzugt wird dieses Verstärkungselement 32 über die Haftkraft des die Schichte 16 bildenden Kunststoffes 17 an dem Tragelement 20 bzw. mit diesem am Kern 4 befestigt und gehaltert.

Selbstverständlich ist es in diesem Zusammenhang auch möglich, ein derartiges Verstärkungselement 32 an jeder beliebigen Stelle der dem Tragelement 19 und/oder 20 zugewandten Oberfläche des Kerns 4 vorzusehen. Es wäre natürlich auch möglich, den Kern 4 beispielsweise durch zwei Platten zu bilden und zwischen diesen ein zusätzliches Verstärkungselement 32 anzuordnen. Eine andere Möglichkeit würde darin bestehen, daß beim Verpressen des Bauelementes 1 ein zu hoher Druck ausgeübt wird, daß ein auf der Oberfläche des Kerns 4 aufgelegtes Verstärkungselement 32 durch Verdichtung der Schaumstruktur soweit in den Kern 4 eingedrückt wird, daß das Tragelement 19 und/oder 20 ebenflächig darüber hinweg verläuft. Diese örtliche Verdichtung des Kerns 4 wird nach der Erstarrung des thermoplastischen Kunststoffes 17 durch die ihm innewohnende Festigkeit aufrechterhalten, sodaß es zu keiner zusätzlichen thermischen Verdichtung durch ein Verformen der Zellstruktur bzw. ein Zerbrechen der Zellstruktur kommen kann.

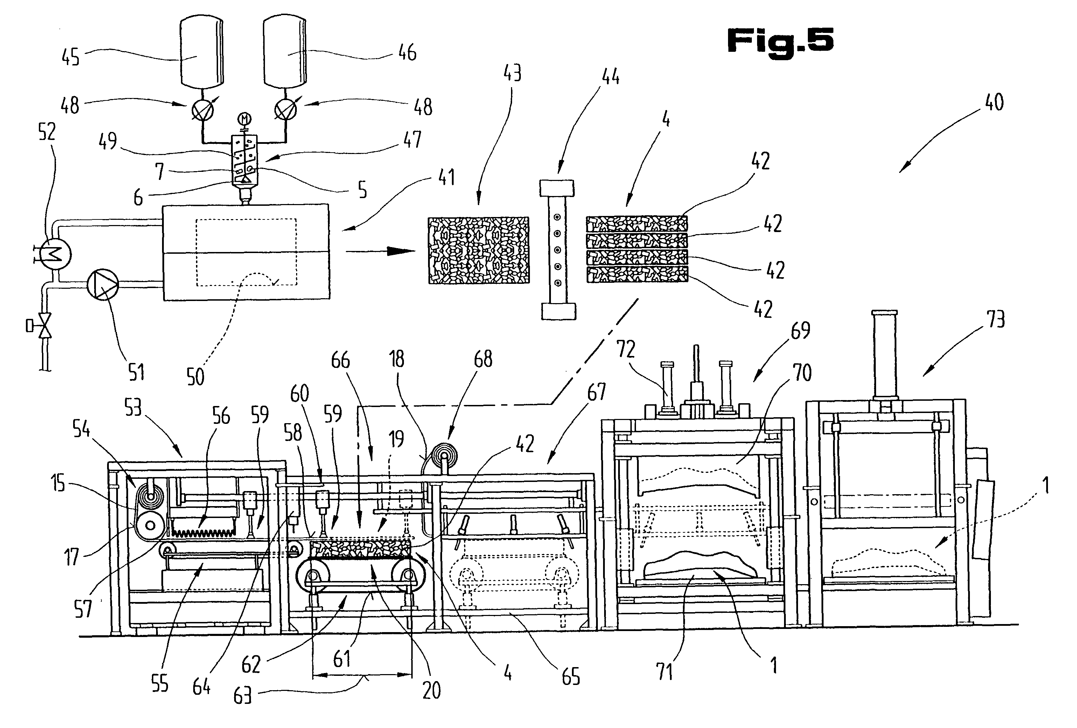

In Fig. 4 ist gezeigt, daß gleichzeitig mit dem Verpressen eines Bauelementes 1 durch die räumliche Verformung der Tragelemente 19, 20 eine Dichte des Kerns 4 in unterschiedlich nebeneinander angeordneten Bereichen 33, 34 und 35 eine Dicke 36, 37 bzw. 38 unterschiedlich groß sein kann.

Interessant ist bei dieser Ausbildung des erfindungsgemäßen Bauelementes 1 bzw. beim Verfahren zum Herstellen dieses Bauelementes 1, daß diese unterschiedlichen Dicken 36 bis 38 nicht durch ein thermisches oder dynamisches Zusammenpacken durch Zerbrechen des Zellgerüstes 22 hergestellt werden, sondern lediglich unter Ausnutzung der elastischen Eigenschaften der Flocken 5, 6, 7, die meistens aus Kunststoffschaum 12,13 bestehen, d.h. durch deren elastisches Zusammendrücken und ebenso der elastischen Verformung des zwischen diesen befindlichen Zellgerüstes 22, wodurch in diesen höher verdichteten Bereichen 34 und 35 die einzelnen Flocken 5, 6, 7 ein kleineres Außenvolumen aufweisen und dichter gelagert sind. Dadurch wird ein höheres Raumgewicht und damit eine größere Steifigkeit des Kerns 4 in diesen Bereichen erreicht, sodaß beispielsweise die Ausreißkräfte für Befestigungsmittel 31, die durch eine Bohrung 39 durch das Bauelement 1 hindurchgeführt werden können, höher angesetzt werden kann. Dadurch ist es aber auch möglich, durch gezielte Verdichtung bzw. Veränderung der Dicke eines ursprünglich eine gleiche Dicke aufweisenden Kerns 4 unterschiedlich versteifte Zonen im Bereich eines technischen Bauelementes, beispielsweise eines Verkleidungselementes oder dgl., zu schaffen.

In Fig. 5 ist eine Vorrichtung 40 zum Herstellen eines Bauelementes 1 in vereinfachter, schematischer Darstellung gezeigt.

Die Herstellung des Bauelementes 1 erfolgt dabei derart, daß in einer Schäumform 41 durch Einwirkung von Druck und/oder Temperatur und/oder Feuchtigkeit entweder Platten 42 für den Kern 4 einzeln hergestellt oder, wie dies auch schematisch angedeutet ist, ein Schaumblock 43 produziert wird, der mittels einer Schneidvorrichtung 44 in die einzelnen Platten 42 aufgeteilt wird. Die Schäumform wird beispielsweise von einem Aufnahmebehälter 45 mit Primärmaterial und einem Rohmaterialkessel 46 mit den Flocken 5, 6, 7 aus unterschiedlichen Arten von Schäumen bzw. Materialien mit unterschiedlicher Härte bzw. Steifigkeit wie Hart- Mittelhart- bzw. Weichschäumen beschickt, wobei es sich hierbei um sogenannte Recyclingschäume oder Altmaterialien handelt, die auch mit entsprechenden Folienteilen oder Beschichtungen versehen sein können Das Primärmaterial, welches ebenfalls durch ein Recyclingverfahren gewonnen sein kann, kann in flüssiger Konsistenz zur Herstellung des Zellgerüstes einer Mischvorrichtung 47 über entsprechende Dosierelemente 48 zugeführt werden. In dieser Mischvorrichtung 47 werden die Flocken 5, 6, 7 mit flüssigem Rohmaterial 49 für das Zellgerüst 22 vermischt und dann in einen Formhohlraum 50 eingefüllt. Durch Zufuhr eines Reaktionsmittels, beispielsweise mit einer Pumpe 51, unter Umständen eines Dampfes, insbesondere eines Trockendampfes zwischen 120°C und 160°C über einen Wärmetauscher 52 reagiert das flüssige Rohmaterial 49 aus und wird beispielsweise durch freigesetzte Gase aufgebläht, sodaß sich eine Zellstruktur, insbesondere das Zellgerüst 22 aus geschlossenen oder offenen bzw. teilweise geschlossenen oder offenen Zellen aufbaut.

Nach einer der Reaktionsphase nachgeschalteten Trockenphase, in der beispielsweise nur trockene Luft durchgeblasen wird, kann dann der Schaumblock 43 aus der Schäumform 41 entnommen werden.

Die Herstellung des Bauelementes 1, beispielsweise in einer dargestellten Taktstraße erfolgt nun derart, daß in einer ersten Arbeitsstation 53 von einer Rolle 54 der Tragkörper 15 abgerollt und auf einem umlaufenden Bandförderer 55, beispielsweise mit einem Teflonband oder einem mit einem Gleitmittel beschichteten Band aufgelegt wird. Bevorzugt ist der Tragkörper 15 mit einem pastenförmigen und/oder pulverförmigen thermoplastischen Kunststoff 17 beschichtet. Es ist aber auch möglich, daß unmittelbar vor einer Heizvorrichtung 56 der thermoplastische Kunststoff 17 in flüssiger oder pastenförmiger Form über eine Auftragsvorrichtung 57 aufgebracht wird. Im Durchlauf durch die Heizvorrichtung 56 wird der thermoplastische Kunststoff 17 soweit erweicht, daß er seine vollen Hafteigenschaften aufweist und zumindest elastoplastisch verdrängbar ist, d.h. er weist eine plastische bzw. flüssige oder teigige Konsistenz auf.

Die Transportvorrichtung kann durch zwei parallel zueinander in einstellbarem Abstand übereinander verlaufende Transportwände gebildet sein.

Ein Anfang 58 des Tragkörpers 15 wird durch einen Greifer 59 einer Handlingvorrichtung 60 erfaßt und über ein Transportband 61 zu einer weiteren Fördervorrichtung 62 vorgezogen. Dazu kann z.B. mit einem weiteren Greifer 59 der Tragkörper 15 erfaßt werden. In einem Schneidvorgang wird in einer gewünschten Länge 63 der Platte 42 mittels einer Schneidvorrichtung 64 der Tragkörper 15 durchtrennt und mit den beiden Greifern 59 als Tragelement 20 z.B. direkt auf das Transportband 61 der Fördervorrichtung 62 aufgelegt.

Anschließend wird mit einer weiteren Handlingvorrichtung 60, die im Detail nicht dargestellt ist, bzw. können hierzu auch die gleichen Greifer 59 verwendet werden, eine Platte 42 auf dem Tragelement 20 aufgelegt und danach wie in zuvor beschriebener Weise auf die Oberseite dieser Platte 42 wiederum ein Tragkörper 15 aufgebracht werden. Entsprechend den verschiedenen in den Fig. 1 bis 4 beschriebenen Ausführungsvarianten ist es weiters selbstverständlich auch noch möglich, daß auf eine oder beide Oberflächen der Tragkörper 15 eine Decklage 18,21 aufgebracht wird, indem z.B. die Decklage 21 vor dem Auflegen des Tragelementes 20 und die Decklage 18 nach dem Aufbringen des Tragelementes 19 auf die Platte 42 bzw. den Kern 4 erfolgt.

Danach kann die Fördervorrichtung 62 z.B. entlang einer Führungsbahn 65 aus einer Auflegestation 66 in eine Vorpreßstation 67 bzw. in eine Auflegestation für die Decklage 18 bzw. 21 transportiert werden. Es kann nämlich z.B. in dieser Vorpreßstation 67 die von einer Rolle 68 abgewickelte Decklage 18 auf den Tragkörper 15 aufgelegt und durch entsprechenden Druck grob positioniert und zum Anhaften an diesem gebracht werden.

Danach wird das vorgefertigte Halbzeug in eine Formpresse 69 eingelegt.

Durch das Schließen bzw. Aufsetzen eines Formoberteils 70 auf einen Formunterteil 71 mittels Preßantrieben 72 kann das Bauelement 1, in die in schematisch in vollen Linien gezeichnete Raumform, umgeformt werden, wobei das Bauelement 1 solange zwischen dem Formoberteil 70 und dem Formunterteil 71 gehalten wird, bis der thermoplastische Kunststoff 17 der Schichte 16, in die der Tragkörper 15 eingebettet ist, soweit erstarrt oder abgekühlt ist, daß die Formsteifigkeit ausreicht, den Kern 4 bzw. die darin enthaltenen Flocken 5,6,7 mit dem Zellgerüst 22 in der gewünschten Raumform eingepreßt zu halten bzw. festzulegen. Dieser Temperaturbereich, bis zu welchem der als Bauelement 1 in der Formpresse 69 gehalten werden muß, ist jeweils vom verwendeten Kunststoff 17 abhängig bzw. auch von den durch die Verformung des Kerns 4 entstehenden, diesem innewohnenden Rückstellkräften, sodaß die gewünschte Raumform dann auch nach dem vollständigen Erkalten des Bauelementes 1 beibehalten werden kann.

Dieser Formpresse 69 muß eine Stanzstation 73 nachgeordnet sein, in der dann das vorgefertigte Bauelement 1 - wie mit strichlierten Linien angedeutet - eingelegt und an seinem Umfang in die gewünschte endgültige Form beschnitten und gegebenenfalls - das ebenfalls im Rahmen der Erfindung möglich ist - durch einen zusätzlichen thermischen Umformvorgang in die gewünschte Endraumform verbracht wird.

Im Zuge der Herstellung des Bauelementes 1 ist es selbstverständlich auch möglich, daß z.B. in der Auflegestation 66 oder in der Vorpreßstation 67 zwischen dem Kern 4 bzw. demTragelement 20 und/oder einer Decklage 18 bzw. 21 ein Verstärkungselement 32 positioniert und eingelegt werden kann. Selbstverständlich ist es auch möglich, das Tragelement 19 bzw. 20 aus mehreren als den beschriebenen Schichten herzustellen, um über den Tragkörper 15 unter Anbindung mit dem Kunststoff 17 der Schichte 16 eine weitere Folie einzulegen, um die gewünschte Biege- bzw. Verformungs- oder Festigungseigenschaften an der Formoberfläche des Bauelementes 1 zu erreichen.

Selbstverständlich handelt es sich bei der beschriebenen Vorrichtung 40 und dem in Verbindung mit der Vorrichtung 40 beschriebenen Verfahren um eine der möglichen Ausführungs- und Anordnungsvarianten, und es kann sowohl die Vorrichtung 40 als auch das Verfahren dem Fachmann im Rahmen des Standes der Technik geläufigen Fachwissens beliebig abgeändert werden, solange die gewünschten Eigenschaften des Bauelementes 1 bei der Herstellung erreicht werden können.

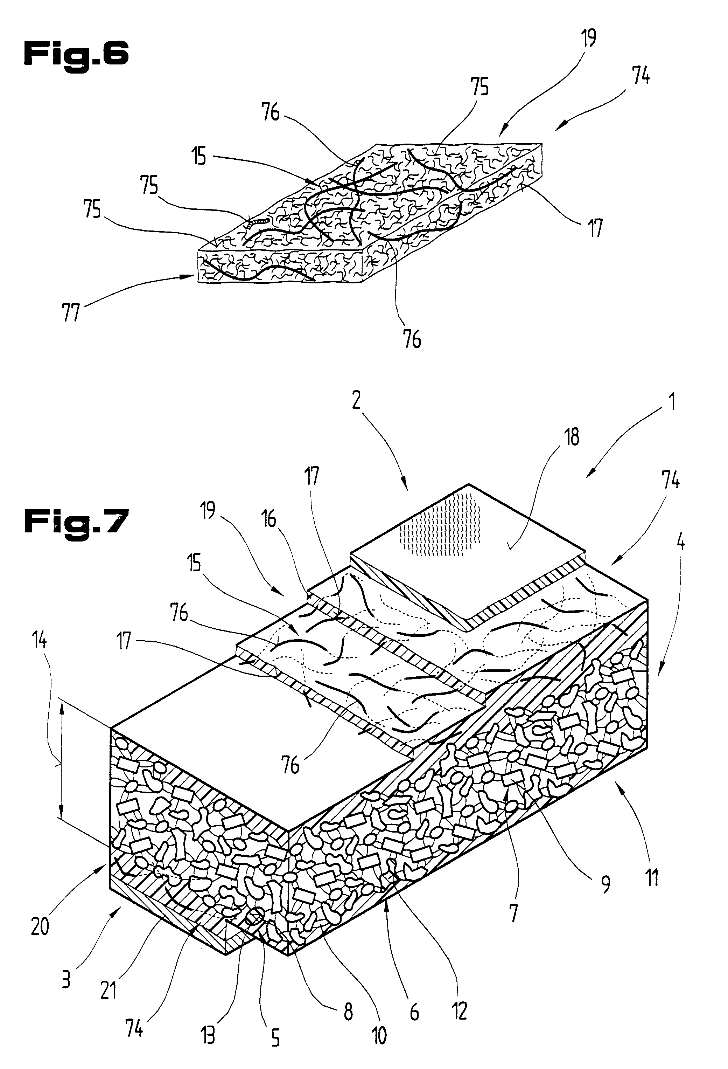

In den Fig. 6 und 7 sind weitere Ausführungsformen für das mehrlagige Bauelement 1 gezeigt, wobei soweit wie möglich für gleichartige Teile gleiche Bezugszeichen verwendet wurden.

So ist in Fig. 6 eine andere Ausbildung für das Tragelement 19 vor seiner Verbindung mit einem Kern 4 gezeigt, wobei das Tragelement 19 in dieser Zustandsform als Vlies 74 ausgebildet ist. Dieses Vlies 74 besteht einerseits aus einer Wirrlage aus einzelnen Fäden 75, welche bevorzugt aus dem thermoplastischen Kunststoff 17, wie z.B. Polypropylen, Polyäthylen, Polyamid, Polystyrol, ABS, Polyvinylchlorid, Polyimid gebildet sind, und andererseits aus länger ausgebildeten Einlagefäden 76, welche den Tragkörper 15 ausbilden. Die Wahl des Werkstoffes der Fäden 75 und der Einlagefäden 76 ist von den gewünschten Einsatzbedingungen abhängig und können beliebig gewählt bzw. untereinander verschiedenst miteinander kombiniert werden. Die Fäden 75 bilden ihrerseits eine eigene Faserlage 77 aus, in welche, bei deren Herstellungsvorgang die einzelnen Einlagefäden 76 des Tragkörpers 15 lose in diese eingebracht werden. Dadurch erreicht man in seinem Gesamtaufbau das einfach herzustellende Vlies 74, welches in seinen Dimensionen jeweils einfach an die gewünschten Einsatzbedingungen angepaßt werden kann. Das Mischungsverhältnis der Fäden 75 zu den Einlagefäden 76 kann z.B. 70 % zu 30 % betragen. Weiters ist bei einem einzelnen Faden 75 gezeigt, daß dieser wiederum aus einzelnen Fasern bzw. Fäden gebildet sein kann. Das gleiche trifft auch für die Ausbildung des Einlagefadens 76 zu.

Selbstverständlich ist es aber auch möglich, die Fäden 75 für die Faserlage 77 aus Polyamiden herzustellen. Für die Fäden 75 der Faserlage 77 empfiehlt es sich weiters, vor allem wenn sie aus Polypropylen oder Aramid oder Polyamid bestehen, daß sie einen Titer, also ein Gewichts-/Längenverhältnis von 2 dtex bis 8 dtex, bevorzugt 3,5 dtex aufweisen. Nachdem die Faserlage 77 dadurch hergestellt wird, daß die einzelnen Fasern bzw. Fäden 75 nur durch Nadeln bzw. Verfilzen und in einigen bestimmten Fällen durch thermische Bindung, also durch gleichzeitige Einwirkung von Druck und Temperatur aneinander haften, bzw. in der die Faserlage 77 bildenden lockeren Matte halten, ist es, um z.B. dann wenn eine hohe Zug- und Reißfestigkeit, vor allem bei geringem Raumgewicht eines derartigen Vlieses erreicht werden soll, vorteilhaft, die richtige Länge der Fasern bzw. Fäden 75 für die Herstellung der Faserlage 77 zu verwenden. Dabei hat sich vor allem eine Länge der Fäden 75 zwischen 5 mm und 50 mm als vorteilhaft erwiesen.

Es ist dabei weiters zu berücksichtigen, daß bei der Herstellung dieses Vlieses 74 bzw. der Faserlage 77 die Fasern bzw. Fäden 75 und/oder Einlagefäden 76 z.B. aus Baumwolle, Schafwolle, Flachs oder auch aus Polyamid, Polyester, PVC, PP, PE oder Nylon, bzw. Aramiden oder dgl., als loses Schüttgut, beispielsweise auf eine als Transportband dienene Trägerlage aufgebracht werden. Während der Vorwärtsbewegung des Schüttgutes auf dieser Trägerlage, wird diese Wirrlage aus Fasern bzw. Fäden 75 und/oder Einlagefäden 76 mittels meist hakenförmiger Nadeln vernadelt bzw. verfilzt, um so einen zusammenhängenden, in sich verbundenen Körper zu bilden. Diese Verbindung ist unabhängig davon, ob die Trägerlage mit der Faserlage über die Fasern bzw. Fäden 75 und/oder Einlagefäden 76 verbunden wird, oder ob das Trägerband ein endlos umlaufender Maschinenteil ist. Auch hier sei erwähnt, daß je nach Einsatzbedingung eine beliebige Kombination des Werkstoffes bzw. der Länge der Fäden 75 und/oder Einlagefäden 76 gewählt werden kann.

Bei einer derartigen vorbeschriebenen Vorgangsweise ist es dann möglich, Raumgewichte der Faserlage 77 bzw. des Vlieses 74 zwischen 10 kg/m³ und 80 kg/m³ zu verwenden. Dadurch kann ein Quadratmetergewicht der Faserlage 77 des Vlieses 74, z.B. bei einer Dicke von zirka 5 mm, zwischen 60 g/m² und 390 g/m², bevorzugt 70 g/m² aufweisen.

Weiters kann es vorteilhaft sein, wenn die Fasern bzw. Fäden 75 und/oder Einlagefäden 76 der Faserlage 77 bzw. des Vlieses 74 vor der Verbindung mit dem Kern 4 des Bauelementes 1, beispielsweise durch thermische Crackung bzw. thermische Bindung verfestigt werden, weil dadurch ein besserer Zusammenhalt der einzelnen Fasern bzw. Fäden 75 und Einlagefäden 76 erreicht wird. Dabei ist es von Vorteil, wenn die einzelnen Fasern bzw. Fäden 75 und Einlagefäden 76 aus Thermoplasten bestehen. Vor allem Thermoplaste weisen am ehesten einen Plastifizierungs- bzw. Erweichungspunkt zwischen 100° und 200° Celsius, bevorzugt zwischen 100° und 120° Celsius auf, die eine thermische Verbindung der einzelnen Fasern bzw. Fäden 75 und Einlagefäden 76 oder eine thermische Verfestigung des gesamten Vlieses 74 begünstigen. Erst bei der vollständigen Aufweichung bzw. Plastifizierung der Fäden 75 beim Anformvorgang an den Kern 4 werden die Einlagefäden 76 in den flüssigen Kunststoff eingebettet und bilden somit nach dem Erkalten des Kunststoffes den Tragkörper 15 aus. Der thermoplastische Kunststoff 17 weist eine geringe Haftung auf, die zwischen 5 N/5cm und 30 N/5cm bei einer Temperatur zwischen 150 °C bis 200 °C beträgt.

Als weiters vorteilhaft hat sich erwiesen, wenn die Einlagefäden 76 des Tragkörpers 15 als sogenannte Langfäden bzw. langfaserige Einlagefäden 76 ausgebildet sind, welche eine Länge zwischen 20 mm und 80 mm aufweisen. Diese einzelnen Einlagefäden 76 können aus den verschiedensten Werkstoffen, wie z.B. aus Glas und/oder Kunsstoff und/oder Metall und/oder Keramik und/oder Graphit und/oder Naturfasern und/oder Kevlar gebildet sein, welche je nach Anwendungsfall untereinander auch beliebig miteinander kombiniert werden können. Diese werden dann bei der thermischen Behandlung des Vlieses 74 in den, aus den einzelnen Fäden 75 gebildeten Kunststoff 17 der-Schichte 16 miteingebettet und von dieser zumindest bereichsweise umschlosssen, wodurch sich das Tragelement 19 ausbildet. Während dieses thermischen Verbindungsvorganges werden die einzelnen losen Einlagefäden 76 des Tragkörpers 15 kraft- und/oder formschlüssig mit der aus dem Kunststoff 17 gebildeten Schichte 16 verbunden.

In der Fig. 7 ist nun das Bauelement 1 gezeigt, bei welchem sowohl das Tragelement 19 als auch das Tragelement 20 durch das in Fig. 6 beschriebene Vlies 74 gebildet ist. Das mehrlagige Bauelement 1 weist wiederum zumindest eine der beiden Deckschichten 2 und 3 auf, wovon in diesem Ausführungsbeispiel beide gezeigt sind, zwischen welchen der Kern 4 angeordnet ist.

Der Kern 4 kann wiederum aus den Flocken 5,6,7 gebildet sein, welche aus Hart-, Mittelhart- und/oder Weichschäumen, gegebenenfalls mit Kaschierungen aus unterschiedlichen Materialien 8,9, bestehen können. Diese sind über den Kunststoffschaum 10, beispielsweise Polyurethan und/oder Polyethylenschaum, Polyetherschaum oder dgl., welcher weiche und/oder mittelharte und/oder harte Konsistenz aufweisen kann, zu der Einzelplatte 11 verbunden. Der Kern 4 kann, z.B. zwischen 70 % und 90 %, bevorzugt 85 % seines Volumens durch die Flocken 5,6,7 aus Kunststoffschaum 12,13 und 10 % bis 30 % des Gewichtes durch den Kunststoffschaum 10 aus Primärmaterial gebildet sein. Die Flocken 5,6,7 aus dem Kunststoffschaum 12,13 können dabei ein Raumgewicht zwischen 20 kg/m³ und 250 kg/m³, bevorzugt 50 kg/m³ bis 150 kg/m³ aufweisen. Das Raumgewicht, des aus einem Primärmaterial hergestellten bevorzugt halbsteifen bzw. halbhart ausgebildeten Kunststoffschaums 10, beträgt bevorzugt zwischen 800 kg/m³ und 1200 kg/m³, bevorzugt 1000 kg/m³. Der Kern 4 ist durch die Einzelplatte 11 mit vorgegebener Dicke 14 gebildet, die bevorzugt durch Zerschneiden eines großvolumigen Schaumstoffblockes hergestellt wird. Es ist aber auch selbstverständlich möglich, die Einzelplatte 11 nur aus Primärmaterial des Kunststoffschaumes 10, welcher als Hart-, Mittelhart- und/oder Weichschaum gebildet sein kann, bzw. anstelle der Flocken 5,6,7 aus Kunststoffschaum 12,13 jegliche andere Werkstoffe wie z.B. Textil, Kork, Holz, Natur- und/oder Kunstsubstanzen zu verwenden. Weiters ist es aber auch möglich, die Flocken 5,6,7 aus Recycling- bzw. Primärkunststoffschaum mit Beschichtungen, insbesondere aus Textil, Leder, Kunststoff oder Kunstleder zu versehen bzw. damit zu kaschieren.

Die beiden Deckschichten 2,3 des Bauelementes 1 werden bei diesem Ausführungsbeispiel durch das hier bereits thermisch behandelte Vlies 74 gebildet, welches eine kraft- und/oder formschlüssige Verbindung zwischen dem Kern 4 und der Decklage 18 bildet.

Es ist aber selbstverständlich auch möglich, den Tragkörper 15 aus Natur- und/oder Kunstmaterialien z.B. aus einem Netz, Gewirke, Gewebe, Geflecht, Gitter oder Vlies aus Fasern bzw. Fäden aus Glas, Metall, Kevlar, Graphit oder Textil auszubilden, die in die Schichte 16 aus dem thermoplastischen Kunststoff 17 eingebettet sind, und welche bei der thermischen Behandlung an den Kern 4 angeformt werden.

Wie weiters im Bereich der Deckschichte 2 schematisch angedeutet ist, ist es auch möglich, über die Schichte 16 aus dem thermoplastischen Kunststoff 17, wie z.B. Polypropylen, Polyurethan, gleichzeitig auch die Decklage 18, z.B. einen Stoff, ein Gewirke, Gewebe, einen Teppich oder ein Vlies anzuformen. Als Decklage 18 können wiederum die verschiedensten Werkstoffe Verwendung finden. Diese sind entsprechend des Anwendunggebietes des mehrlagigen Bauelements 1 entsprechend auszuwählen.

Ein besonderer Vorteil eines derart ausgebildeten Bauelements 1 liegt aber vor allem darin, daß zumindest eine harte, widerstandsfähige Deckschichte 2 bzw. dessen Tragelement 19 und gegebenenfalls die Decklage 18 von der weiteren Deckschichte 3 bzw. deren Tragelement 20 oder einer eigenen Decklage 21 elastisch gedämpft und über die Flocken 5,6,7 aus Kunststoffschaum 12,13, bzw. nur durch den aus primären Kunststoffschaum 10 des Kerns 4 distanziert ist. Damit können diese beiden Deckschichten 2,3 unabhängig voneinander schwingen, und es kann dadurch eine gute Schalldämmung erreicht werden, wie sie vor allem im Kraftfahrzeugwesen bzw. bei Raumtrennwänden oder dgl. mit besonderem Vorteil, bzw. für die Körperschalldämmung einsetzbar ist.

Der Vorteil liegt vor allem darin, daß dadurch die widerstandsfähigen Deckschichten 2,3 unter Verwendung der mit dem Tragkörper 15 verstärkten Schichte 16 aus thermoplastischem Kunststoff 17, eine hohe Oberflächen- und/oder Kantendruckfestigkeit erreicht wird, und andererseits das Gesamtgewicht derartiger Bauelemente 1 durch das geringe Raumgewicht des Kerns 4 gering gehalten werden kann.

Für die Herstellung des Bauelementes 1 können verschiedene Herstellungsschritte gewählt werden. So ist es z.B. möglich, einerseits Fertigteile und andererseits Halbfertigteile herzustellen. Bei der Herstellung der Fertigteile wird in einem durchlaufenden Arbeitsgang am Kern 4 zumindest eine Deckschichte 2,3 mit den zugehörigen Decklagen 18,21 angeformt. Dabei erreicht man eine innige Verbindung zwischen den Oberflächen des Kerns und den einzelnen Decklagen 18,21 über die Tragelemente 19,20. Bei diesem Herstellungsvorgang ist es selbstverständlich auch möglich, dem Bauelement 1 eine gewünschte Raumform zu verleihen und eventuell den Kern 4 zumindest bereichsweise zu verdichten.

Um ein derartig hergestelltes Bauelement 1 in seiner gewünschten Raumform zu stabilisieren, wird es nach dem Verbindungsvorgang, welcher unter den zuvor beschriebenen Temperaturen erfolgen kann, entweder direkt im Formwerkzeug bzw. in einem eigens dafür vorgesehenen Kühlwerkzeug entsprechend seiner Form abgekühlt um es in dieser Raumform zu stabilisieren bzw. zu verfestigen d.h. den Kunststoff "einzufrieren".

Weiters ist es aber auch möglich, einen sogenannten Halbfertigteil herzustellen, welcher lediglich aus dem Kern 4 und zumindest an einer Oberfläche des Kerns 4 angeordneten Tragelement 19,20 gebildet ist. Dieser Halbfertigteil kann als bahnförmiges Element bzw. Platte ausgebildet sein. Der Halbfertigteil kann dann für die weitere Verwendung, beispielsweise in einer Heizstation, erwärmt werden, sodaß der Kunststoff 17 der Tragelemente 19,20 erweicht bzw. verflüssigt wird, jedoch zumindest soweit erhitzt wird, daß er an seiner Oberfläche klebrig wird. Diese Erwärmung kann vor dem Auflegen einer Decklage 18,21 auf zumindest einer Oberfläche des Tragelementes 19,20 oder nach dem Auflegen dieser Decklage 18,21 erfolgen.

Während der Erwärmung dieses Halbfertigteils ist darauf zu achten, daß während der Erwärmung der Halbfertigteil mit oder ohne der bereits eingelegten Deckschichte entsprechend der vorgefertigten Raumform oder bzw. in dieser vorgefertigten Form eingespannt wird, bzw. eine Ausdehnung über die vorgefertigten Abmessungen hinaus, durch Aufbau eines entsprechenden Gegendruckes verhindert wird. Dies ist deshalb möglich, da beim erneuten Erwärmen des Halbfertigteils, die in den Zellen und Hohlräumen des Halbfertigteils, insbesondere des Kunststoffschaums bzw. des Kunststoffmaterials, eine Ausdehnung der Luft und zusätzliches Ausgasen von chemischen Bestandteilen stattfindet, die versuchen, das Halbfertigteil aufzublasen, wenn diese Gase aufgrund der geschlossenen Zellen oder durch die beiden Tragelemente 19,20 nicht nach außen durchtreten können. Um also eine Formstabilität während des Erwärmens sicherzustellen, ist ein Festhalten der Halbfertigteile in der gewünschten Raumform notwendig.

Selbstverständlich kann das dann erwärmte Halbfertigprodukt, beispielsweise auch nach zwischenzeitlichem Einlegen einer gewünschten Decklage 18,21, auf jede beliebige Raumform mit den Tragelementen 19,20 sowie den Decklagen 18,21 verbracht und in dieser durch Abkühlen verfestigt werden.

Somit ist es auf einfache Art und Weise möglich, sowohl Bauelemente 1 als Fertigprodukt bzw. Fertigteil herzustellen und andererseits auf Vorrat Halbfertigteile bzw. Halbfertigprodukte herzustellen, welche je nach Kundenwunsch anschließend mit der gewünschten Decklage 18 bzw. 21 beschichtet werden können.

Lediglich der Ordnung halber sei abschließend erwähnt, daß einzelne Teile der Vorrichtungen 40 bzw. des Bauelementes 1 und dessen Schichten maßstäblich stark übertrieben oder unproportional dargestellt wurden, um das Verständnis der Erfindung zu erleichtern. Gleiches gilt für die gewählten Dicken-, Breiten- und Längenverhältnisse der einzelnen Schichten, insbesondere des Tragkörpers 15 und der Schichten aus dem thermoplastischen Kunststoff 17.

Das Vlies 74 kann, wie bereits vorstehend ausführlich erläutert, aus den verschiedensten Thermoplasten bestehten. Es ist aber selbstverständlich auch möglich, Duroplaste zu verwenden. Im letztgenannten Fall ist jedoch die vorherige Herstellung von Halbfabrikaten, die nach einer weiteren Erwärmung in ihre Endform gebracht werden, nicht mehr möglich, sondern es können dann nur Bauteile hergestellt werden, die durchgängig in ihre Endform räumlich verformt werden.

Bei der Verwendung eines derartigen Vlieses ist vorteilhaft, wenn das Vlies ein Flächengewicht von 250 bis 1000 g/m³, bevorzugt zwischen 500 und 800 g/m³ aufweist.

Derartige Werte werden vor allem dann erzielt, wenn das Vlies aus 70 % Polypropylen und 30 % Glasfasern besteht. Eine derartige Zusammensetzung ist vorteilhaft, jedoch keinesfalls zwingend oder einschränkend.

Wie bereits vorstehend angeführt, ist auch die Herstellung von Halbfabrikaten möglich, die vorgeformt und vorgefertigt werden, um z.B. durch Aufbringen einer endgültig zu bestimmenden Decklage, nachfolgend fertiggestellt werden können.

Bei derartigen vorgefertigten Halbfabrikaten ist zu beachten, daß die Dicke dieses Halbfabrikates in etwa 110 % der Enddicke von 100 % des Bandelements betragen soll. Bei dem nachträglichen Erwärmen das Halbfabrikates zur entgültigen Fertigstellung ist, um ein Hochwachsen des Bauelementes zu vermeiden, eine Druckbelastung erforderlich, die z.B. 30 Bar bei einem ca. 2 m² großen Bauelement betragen kann.

Es kann auch jedes einzelne der Ausführungsbeispiele eine für sich eigenständige, erfindungsgemäße Lösung darstellen, gleichermaßen können auch einzelne bzw. beliebige Kombinationen der Patentansprüche eigenständige, erfindungsgemäße Lösungen bilden, ebenso wie Einzelmerkmale der Ausführungsbeispiele gegebenenfalls in beliebiger Kombination aus verschiedenen Ausführungsbeispielen.

Vor allem können die einzelnen in den Fig. 1,2; 3; 4; 5; 6, 7 gezeigten Ausführungen, den Gegenstand von eigenständigen erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Bauelement
- 2: Deckschichte
- 3: Deckschichte
- 4: Kern
- 5: Flocke

- 6: Flocke
- 7: Flocke
- 8: Material
- 9: Material
- 10: Kunststoffschaum

- 11: Einzelplatte
- 12: Kunststoffschaum
- 13: Kunststoffschaum
- 14: Dicke
- 15: Tragkörper

- 16: Schichte
- 17: Kunststoff
- 18: Decklage
- 19: Tragelement
- 20: Tragelement

- 21: Decklage
- 22: Zellgerüst
- 23: Durchsetzung
- 24: Oberflächtenteile
- 25: Oberflächenteil

- 26: Tiefe
- 27: Pfeil
- 28: Motor
- 29: Pfeil
- 30: Fahrzeugrahmen

- 31: Befestigungsmittel
- 32: Verstärkungselement
- 33: Bereich
- 34: Bereich
- 35: Bereich

- 36: Dicke
- 37: Dicke
- 38: Dicke
- 39: Bohrung
- 40: Vorrichtung

- 41: Schäumform
- 42: Platte
- 43: Schaumblock
- 44: Schneidvorrichtung
- 45: Aufnahmebehälter

- 46: Rohmaterialkessel
- 47: Mischvorrichtung
- 48: Dosierelement
- 49: Rohmaterial
- 50: Formhohlraum

- 51: Pumpe
- 52: Wärmetauscher
- 53: Arbeitsstation
- 54: Rolle
- 55: Bandförderer

- 56: Heizvorrichtung
- 57: Auftragsvorrichtung
- 58: Anfang
- 59: Greifer
- 60: Handlingvorrichtung

- 61: Transportband
- 62: Fördervorrichtung
- 63: Länge
- 64: Schneidvorrichtung
- 65: Führungsbahn

- 66: Auflegestation
- 67: Vorpreßstation
- 68: Rolle
- 69: Formpresse
- 70: Formoberteil

- 71: Formunterteil
- 72: Preßantrieb
- 73: Stanzstation
- 74: Vlies
- 75: Faden

- 76: Einlagefaden
- 77: Faserlage

## Patentansprüche

1. Mehrlagiges Bauelement (1) bestehend aus einem Kern (4) aus einem Kunststoffschaum (10) aus Primärmaterial und gegebenenfalls mit diesem verbundenen Flokken (5, 6, 7) aus Kunststoffschaum (12, 13) und mindestens einer auf einer Oberfläche des Kerns (4) angeordneten und mit dieser kraft- und formschlüssig verbundenen Deckschichte (2 ,3) mit einem Tragkörper (15) aus Fasern bzw. Fäden, **dadurch gekennzeichnet, daß** die Fasern bzw. Fäden des Tragkörpers (15) in eine die Deckschichte (2, 3) bildende Schichte (16) aus thermoplastischem Kunststoff (17) eingebettet sind und über diese zumindest am Kern (4) angeformt und kraft- bzw. formschlüssig mit diesem verbunden sind, wobei der Kunststoff (17) bei einer Temperatur zwischen 150 °C und 200 °C eine Haftung aufweist, die im Bereich zwischen 5 N/5cm und 30 N/5 cm liegt.

2. Mehrlagiges Bauelement nach Anspruch 1, **dadurch gekennzeichnet, daß** der Kern (4) durch Flocken (5,6,7) aus Recycling- bzw. Primärkunststoffschaum, insbesondere aus Hart- bzw. Mittelhart- und/oder Weichschäumen gebildet ist.

3. Mehrlagiges Bauelement nach Anspruch 1 oder 2, **dadurch gekennzeichnet, daß** die Flocken (5,6,7) aus Recycling- bzw. Primärkunststoffschaum mit Beschichtungen, insbesondere aus Textil, Leder, Kunststoff- oder Kunstleder versehen bzw. damit kaschiert sind.

4. Mehrlagiges Bauelement nach einem oder mehreren der Ansprüche 1 bis 3, **dadurch gekennzeichnet, daß** der Kern (4) zwischen 70 Vol.-% und 95 Vol.-%, bevorzugt 85 Vol.-% Flocken (5,6,7) aus Kunststoffschaum (12, 13) enthält.

5. Mehrlagiges Bauelement nach einem oder mehreren der Ansprüche 1 bis 4, **dadurch gekennzeichnet, daß** 10 bis 20 % des Gewichtes des Kerns (4) durch einen Kunststoffschaum (10) aus Primärmaterialien, z.B. Polyurethan, gebildet ist.

6. Mehrlagiges Bauelement nach einem oder mehreren der Ansprüche 1 bis 5, **dadurch gekennzeichnet, daß** das Raumgewicht des dem Kern (4) zugesetzten Recyclingkunststoffschaums zwischen 20 kg/m³ und 250 kg/m³, bevorzugt zwischen 50 kg/m³ und 150 kg/m³ beträgt.

7. Mehrlagiges Bauelement nach einem oder mehreren der Ansprüche 1 bis 6, **dadurch gekennzeichnet, daß** das Raumgewicht des aus Primärmaterial gebildeten Kunststoffschaums (10) zwischen 800 kg/m³ und 1200 kg/m³, bevorzugt 1000 kg/m³, beträgt.

8. Mehrlagiges Bauelement nach einem oder mehreren der Ansprüche 1 bis 7, **dadurch gekennzeichnet, daß** der Kunststoffschaum (10) aus Primärmaterial halbhart ist.

9. Mehrlagiges Bauelement nach einem oder mehreren der Ansprüche 1 bis 8, **dadurch gekennzeichnet, daß** die Schichte (16) aus thermoplastischem Kunststoff (17) durch Polyäthylen, Polyamid, Polypropylen, Polystyrol, Polyvinylchlorid, Polyimid oder ABS gebildet ist.

10. Mehrlagiges Bauelement nach einem oder mehreren der Ansprüche 1 bis 9, **dadurch gekennzeichnet, daß** der Tragkörper (15) durch ein Netz, ein Gewirke oder ein Vlies aus verschiedenen Fasern bzw. Einlegefäden (76) gebildet ist, wobei der Werkstoff für den Tragkörper (15) aus einer Glas, Metall, Kevlar, Graphit, Textil, Kunststoff, Keramik, Naturfasern und Karbon enthaltenden Gruppe ausgewählt ist.

11. Mehrlagiges Bauelement nach einem oder mehreren der Ansprüche 1 bis 10, **dadurch gekennzeichnet, daß** der Tragkörper (15) aus Polyurethan gebildet ist.

12. Mehrlagiges Bauelement nach einem oder mehreren der Ansprüche 1 bis 11, **dadurch gekennzeichnet, daß** der thermoplastische Kunststoff (17) unter Druck und unter Temperatur zwischen 120 °C und 180 °C zumindest zähflüssig ist.

13. Mehrlagiges Bauelement nach einem oder mehreren der Ansprüche 1 bis 12, **dadurch gekennzeichnet, daß** auf dem Tragkörper (15) eine Decklage (18), insbesondere ein Gewirke, Gewebe, ein Vlies oder eine Folie angeordnet ist und über die Schichte (16) aus thermoplastischem Kunststoff (17) an dem Tragkörper (15) angeformt ist bzw. anhaftet.

14. Mehrlagiges Bauelement nach einem oder mehreren der Ansprüche 1 bis 13, **dadurch gekennzeichnet, daß** in dem aus bevorzugt aus mehreren Platten bestehenden Kern (4) bzw. zwischen dem Kern (4) und dem Tragelement (19,20) ein Verstärkungselement (32) angeordnet ist.

15. Mehrlagiges Bauelement nach einem oder mehreren der Ansprüche 1 bis 14, **dadurch gekennzeichnet, daß** zwischen dem Tragkörper (15) eines Tragelementes (19,20) und einer Decklage (18,21) ein Verstärkungselement (32) angeordnet bzw. bevorzugt in die Schichte (16) des thermoplastischen Kunststoffes (17) eingebettet ist.

16. Mehrlagiges Bauelement nach einem oder mehreren der Ansprüche 1 bis 15, **dadurch gekennzeichnet, daß** das Tragelement (19, 20) als Vlies (74) ausgebildet ist.

17. Mehrlagiges Bauelement nach Anspruch 16, **dadurch gekennzeichnet, daß** das Vlies (74) als Wirrlage aus Fäden (75) und/oder Einlagefäden (76) bzw. Fasern gebildet ist.

18. Mehrlagiges Bauelement nach Anspruch 17, **dadurch gekennzeichnet, daß** die Fäden (75) aus Thermoplasten, insbesondere Polypropylen, Polyamid, Aramid, Polyester, PVC, ABS, Polyimid, Polystyrol gebildet sind und eine Länge zwischen 5 und 50 mm aufweisen.

19. Mehrlagiges Bauelement nach Anspruch 17 oder 18, **dadurch gekennzeichnet, daß** die Einlagefäden (76) bzw. Fasern in den Kunststoff (17) der Schichte (16) eingebettet sind und den Tragkörper (15) ausbilden, sowie eine Länge zwischen 20 mm und 80 mm aufweisen.

20. Verfahren zur Herstellung eines mehrlagigen Bauelementes (1) bei dem Flocken (5, 6, 7) aus einem Kunststoffschaum (12, 13) mit einem flüssigen Primärmaterial eines Kunststoffschaums (10) vermischt und zu einer Platte (42) bzw. zu einem Schaumblock (43) geformt werden, der durch Einwirkung von Druck und/oder Temperatur und/oder Feuchtigkeit zum Ausreagieren gebracht wird und damit die Flocken (5, 6, 7) aus Kunststoffschaum (12, 13) über den Kunststoffschaum (10) aus Primärmaterial untereinander verbunden werden, worauf auf zumindest eine Oberfläche einer derartigen Platte (42) oder des Schaumblockes (43) eine Deckschichte (2, 3) aufgebracht und unter Einwirkung von Druck und/oder Temperatur unter ggf. räumlicher Verformung die Deckschichte (2, 3) mit der Platte (42) bzw. dem Schaumblock (43) zu dem mehrlagigen Bauelement (1) verbunden wird, **dadurch gekennzeichnet, daß** vor dem Auflegen der Deckschicht auf die Platte (42) bzw. den Schaumblock (43) auf die Deckschicht (2, 3) ein thermoplastischer Kunststoff (17), der bei einer Temperatur zwischen 150 °C und 200 °C eine Haftung aufweist, die im Bereich zwischen 5 N/5 cm und 30 N/5 cm liegt, auf einen faser- bzw. fadenförmigen Tragkörper (15) derselben aufgebracht wird, daran anschließend die Deckschichte (2, 3) mit dem thermoplastischen Kunststoff (17) zumindest soweit erwärmt wird, daß er zähflüssig ist und den Tragkörper (15) einbettet, worauf die Deckschicht (2, 3) auf die einen Kern (4) des mehrlagigen Bauelementes (1) bildende Platte (42) bzw. Schaumblock (43) aufgelegt und auf diese zur Verdrängung des thermoplastischen Kunststoffes (17) in die Oberflächenbereiche des Kerns (4) eingedrückt und unmittelbar anschließend die Deckschichte (2, 3) abgekühlt wird und nach einer ausreichenden Erstarrung und/oder nach dem Unterschreiten der Temperatur des Einfrier- oder des Fließpunktes des thermoplastischen Kunststoffes (17) das Bauelement (1) aus der Form entnommen wird.

21. Verfahren zur Herstellung eines mehrlagigen Bauelementes (1) bei dem flüssiges, gegebenenfalls mit Flocken (5, 6, 7) aus einem Kunststoffschaum (12, 13) vermischtes Primärmaterial für einen Kunststoffschaum (10) zu einer Platte (42) bzw. zu einem Schaumblock (43) geformt wird, die bzw. der durch Einwirkung von Druck und/oder Temperatur und/oder Feuchtigkeit zum Ausreagieren gebracht wird und gegebenenfalls damit die Flocken (5, 6, 7) aus Kunststoffschaum (12, 13) über den Kunststoffschaum (10) aus Primärmaterial untereinander verbunden werden, worauf auf zumindest eine Oberfläche einer derartigen Platte (42) oder des Schaumblockes (43) eine Deckschichte (2, 3) aufgebracht und diese unter Einwirkung von Druck und/oder Temperatur unter ggf. räumlicher Verformung mit der Platte (42) bzw. dem Schaumblock (43) zu dem mehrlagigen Bauelement (1) verbunden wird, **dadurch gekennzeichnet, daß** für die Deckschichte (2, 3) ein Wirrlagevlies aus Fäden (75) aus einem thermoplastischen Kunststoff (17), der bei einer Temperatur zwischen 150°C und 200°C eine Haftung aufweist, die im Bereich zwischen 5 N/5cm und 30 N/5cm liegt, und Einlagefäden (76) verwendet wird, wobei die Fäden (75) durch thermische Behandlung aufschmelzen und unter Einbettung der Einlagefäden (76) die Schichte (16) der Deckschicht (2, 3) ausbilden.

22. Verfahren nach Anspruch 20 oder 21, **dadurch gekennzeichnet, daß** die Deckschichte (2, 3) und/oder der Kern (4) gleichzeitig mit dem Verdrängen des thermoplastischen Kunststoffes (17) in die Oberflächenbereiche des Kerns (4) räumlich verformt wird.

23. Verfahren nach einem der Ansprüch 20 oder 22, **dadurch gekennzeichnet, daß** der Kern (4) vor bzw. während der räumlichen Verformung der Deckschichten (2, 3) und des Kerns (4) erwärmt wird.

24. Verfahren nach einem der Ansprüche 20 bis 23, **dadurch gekennzeichnet, daß** gleichzeitig mit der räumlichen Verformung der Deckschichte (2, 3) das Zellgerüst (22) bzw. die Zellstruktur des Kerns (4) thermisch gecrackt und in der verformten Stellung fixiert wird.

25. Verfahren nach einem der Ansprüche 20 bis 24, **dadurch gekennzeichnet, daß** der thermoplastische Kunststoff (17) zur Plastifizierung auf eine Temperatur zwischen 120 °C und 180 °C erwärmt wird.

26. Verfahren nach einem der Ansprüche 20 bis 25, **dadurch gekennzeichnet, daß** vor dem Aufpressen der Deckschichte (2, 3) auf den Kern zwischen der Deckschichte (2, 3) und einem Preßwerkzeug eine Decklage (21) eingelegt und diese über den die Deckschichte (2, 3) durchtränkenden thermoplastischen Kunststoff (17) mit der Deckschichte (2, 3) bzw. dem Kern (4) zur gemeinsamen Bewegung bzw. bewegungsfest miteinander verbunden bzw. aneinander angeformt wird.

27. Vorrichtung (40) zur Herstellung eines mehrlagigen Bauelementes (1), bestehend aus einem Kern (4) aus über einen Kunststoffschaum (10) aus Primärmaterial verbundenen Flocken (5, 6, 7) aus Kunststoffschaum (12, 13) und zwei auf gegenüberliegenden Oberflächen des Kerns (4) angeordneten, mit diesem kraft- und/oder formschlüssig verbundenen Deckschichten (2, 3) mit einem faser- bzw. fadenförmigen Tragkörper (15), mit einer Fördervorrichtung (62) für den mit thermoplastischem Kunststoff (17) versehenen Tragkörper (15), wobei der Fördervorrichtung (62) zumindest über einen Teilbereich Ihrer Länge (63) eine Heizvorrichtung (56) zum Auschmelzen des thermoplastischen Kunststoffes (17), wodurch der Tragkörper (15) in diesen eingebettet wird, zugeordnet und eine Preßform nachgeordnet ist, **dadurch gekennzeichnet, daß** die Fördervorrichtung (62) durch zwei parallel zueinander in einstellbarem Abstand übereinander verlaufende Transportwände, insbesondere aus Teflon, gebildet ist und zwischen der Fördervorrichtung (62) und der Preßform eine Handhabungsvorrichtung für den mit der Schicht (16) aus thermoplastischem Kunststoff (17) versehenen Tragkörper (15) der Deckschicht (2, 3) und/oder den aus Kunststoffschaum (10, 12, 13) bestehenden Kern (4) angeordnet ist.

28. Vorrichtung zur Herstellung eines mehrlagigen Bauelementes (1) nach Anspruch 27, **dadurch gekennzeichnet, daß** zumindest eine der beiden Formhälften mit Haltevorrichtungen, insbesondere Vakuumschlitzen zur Aufnahme und Halterung einer Decklage (21) ausgebildet ist.

29. Verfahren zum Wiederaufbereiten eines mehrlagigen Bauelementes (1) aus einem Kern (4) aus einem Kunststoffschaum (10) aus Primärmaterial und gegebenenfalls damit vermischten und verbundenen Flocken (5, 6, 7) aus einem Kunststoffschaum (12, 13) und mit auf zumindest einer Oberfläche des Kerns (4) angeordneten und mit dem Kern (4) kraft- und formschlüssig verbundenen Deckschichte (2, 3) aus einem thermoplastischen Kunststoff (17) in dem ein Tragkörper (15) aus Fasern bzw. Fäden eingebettet ist, **dadurch gekennzeichnet, daß** das mehrlagige Bauelement (1) zumindest in den Oberflächenbereichen auf eine Temperatur zwischen 150 °C und 200 °C erwärmt wird, worauf die Deckschichte (2, 3) vom Kern (4) abgezogen wird.

30. Verfahren nach Anspruch 29, **dadurch gekennzeichnet, daß** der thermoplastische Kunststoff (17) im Tragelement (19, 20) auf eine Temperatur von über 200 °C erwärmt wird und in flüssigem Zustand von dem faser- bzw. fadenförmigenTragkörper (15) entfernt, insbesondere abgesaugt, wird.

## Claims

1. Multi-layered component (1) consisting of a core (4) of plastic foam (10) comprising primary material and, optionally, flocks (5, 6, 7) of plastic foam (12, 13) incorporated therewith and at least one covering (2, 3) disposed on one surface of the core (4) and non-positively and positively joined thereto, having a substrate (15) of fibres or filaments, **characterised in that** the fibres or filaments of the substrate (15) are embedded in a layer (16) of heat-deformable plastic (17) forming the covering (2, 3) and are formed onto and positively and non-positively joined to the core (4) by means thereof, the plastic (17) having an adhesion strength in the range of between 5 N/5 cm and 30 N/5 cm at a temperature of between 150°C and 200°C.

2. Multi-layered component as claimed in claim 1, **characterised in that** the core (4) is made up of flocks (5, 6, 7) of recycled and primary plastic foam, in particular of hard or medium-hard and/or soft foams.

3. Multi-layered component as claimed in claim 1 or 2, **characterised in that** the flocks (5, 6, 7) of recycled or primary plastic foam are provided with coatings, in particular of textile, leather, plastic or synthetic leather, or faced therewith.

4. Multi-layered component as claimed in one or more of claims 1 to 3, **characterised in that** the core (4) contains between 70% by volume and 95% by volume, preferably 85% by volume, of flocks (5, 6, 7) of plastic foam (12, 13).

5. Multi-layered component as claimed in one or more of claims 1 to 4, **characterised in that** 10 to 20% of the weight of the core (4) is made up of a plastic foam (10) of primary materials, e.g. polyurethane.

6. Multi-layered material as claimed in one or more of claims 1 to 5, **characterised in that** the density of the recycled plastic foam added to the core (4) is between 20 kg/m³ and 250 kg/m³, preferably between 50 kg/m³ and 150 kg/m³.

7. Multi-layered component as claimed in one or more of claims 1 to 6, **characterised in that** the density of the plastic foam (10) constituting primary material is between 800 kg/m³ and 1200 kg/m³, preferably 1000 kg/m³.

8. Multi-layered component as claimed in one or more of claims 1 to 7, **characterised in that** the plastic foam (10) of primary material is semi-hard.

9. Multi-layered component as claimed in one or more of claims 1 to 8, **characterised in that** the layer (16) of heat-deformable plastic (17) is made from polyethylene, polyamide, polypropylene, polystyrene, polyvinyl chloride, polyimide or ABS.

10. Multi-layered component as claimed in one or more of claims 1 to 9, **characterised in that** the substrate (15) comprises a network, a knitted fabric or a mat of different fibres or filaments (76), the material of the substrate being selected from a group containing glass, metal, Kevlar, graphite, textile, plastic, ceramic, natural fibres and carbon.

11. Multi-layered component as claimed in one or more of claims 1 to 10, **characterised in that** the substrate (15) is made from polyurethane.

12. Multi-layered component as claimed in one or more of claims 1 to 11, **characterised in that** the heat-deformable plastic (17) is at least viscous when subjected to pressure and exposed to temperatures of between 120°C and 180°C.

13. Multi-layered component as claimed in one or more of claims 1 to 12, **characterised in that** a covering layer (18), in particular a knitted fabric, a woven fabric, a mat or a film, is disposed on the substrate (15) and is formed on or adheres to the substrate (15) by means of the layer (16) of heat-deformable plastic (17).

14. Multi-layered component as claimed in one or more of claims 1 to 13, **characterised in that** a reinforcing element (32) is disposed in the core (4), which preferably consists of several plates, or between the core (4) and the base element (19, 20).

15. Multi-layered component as claimed in one or more of claims 1 to 14, **characterised in that** a reinforcing element (32) is disposed between the substrate (15) of a base element (19, 20) and a covering layer (18, 21) and is preferably embedded in the layer (16) of heat-deformable plastic (17).

16. Multi-layered component as claimed in one or more of claims 1 to 15, **characterised in that** the base element (19, 20) is a mat (74).

17. Multi-layered component as claimed in claim 16, **characterised in that** the mat (74) is provided in the form of a layer of tangled filaments (75) and/or incorporated filaments (76) or fibres.

18. Multi-layered component as claimed in claim 17, **characterised in that** the filaments (75) are of thermoplastic materials, in particular polypropylene, polyamide, aramide, polyester, PVC, ABS, polyimide, polystyrene, and are of a length of between 5 and 50 mm.

19. Multi-layered component as claimed in claim 17 or 18, **characterised in that** the incorporated filaments (76) or fibres are embedded in the plastic (17) of layer (16) and form the substrate (15), and are of a length of between 20 mm and 80 mm.

20. Method of producing a multi-layered component (1), whereby flocks (5, 6, 7) of a plastic foam (12, 13) are admixed with a liquid primary material comprising plastic foam (10) and formed into a plate (42) or a foam block (43), which is caused to react under the effect of pressure and/or temperature and/or humidity so that the flocks (5, 6, 7) of plastic foam (12, 13) bond with one another through the plastic foam (10) of primary material, after which a covering (2, 3) is applied to at least one surface of a resultant plate (42) or the foam block (43), and the covering (2, 3) with the plate (42) or the foam block (43) is joined to the multi-layered element under the effect of pressure and/or temperature, optionally accompanied by three-dimensional deformation, **characterised in that** before applying the top layer to the plate (42) or to the foam block (43), a heat-deformable plastic (17) with an adhesion strength in the range of between 5 N/5 cm and 30 N/5 cm at a temperature of between 150□C and 200□C on a fibrous or filamentous substrate (15) of same is applied to the covering (2, 3), after which the covering (2, 3) with the heat-deformable plastic (17) is heated until it becomes at least viscous and embeds the substrate (15), whereupon the covering (2, 3) is laid on the plate (42) or foam block (43) forming a core (4) of the multi-layered component (1) and is pressed onto it in order to force the heat- deformable plastic (17) into the surface regions of the core (4), immediately after which the covering (2, 3) is cooled and then removed from the mould once it is sufficiently rigid and/or when it has fallen below the temperature of the freezing or flow point of the heat-deformable plastic (17) of the component (1).

21. Method of producing a multi-layered component (1), whereby liquid primary material for a plastic foam (10), optionally admixed with flocks (5, 6, 7) of a plastic foam (12, 13), is formed into a plate (42) or a foam block (43), which is caused to react under the effect of pressure and/or temperature and/or humidity so that the flocks (5, 6, 7) of plastic foam (12, 13) bond with one another through the plastic foam (10) of primary material, after which a covering (2, 3) is applied to at least one surface of a resultant plate (42) or the foam block (43) and is bonded to the multi-layered component (1) with the plate (42) or the foam block (43) under the effect of pressure and/or temperature, optionally accompanied by three-dimensional deformation, **characterised in that** a mat of tangled filaments (75) made from a heat-deformable plastic (17), having an adhesion strength in the range of between 5 N/5 cm and 30 N/5 cm at a temperature of between 150°C and 200°C, is used for the covering (2, 3), as well as incorporated filaments (76), the filaments (75) being melted by a heat treatment to embed the incorporated threads (76) and form the layer (16) of covering (2, 3).

22. Method as claimed in claim 20 or 21, **characterised in that** the covering (2, 3) and/or the core (4) is three-dimensionally deformed at the same time as the heat-deformable plastic (17) is forced into the surface regions of the core (4).

23. Method as claimed in one of claims 20 or 22, **characterised in that** the core (4) is heated prior to or during the three-dimensional deformation of the coverings (2, 3) and the core (4).

24. Method as claimed in one of claims 20 to 23, **characterised in that** the cellular pattern (22) or cell structure of the core (4) is cracked by heating and cured in the deformed position at the same time as the covering (2, 3) is three-dimensionally deformed.

25. Method as claimed in one of claims 20 to 24, **characterised in that** the heat deformable plastic (17) is heated to a temperature of between 120°C and 180°C to bring about plasticization.

26. Method as claimed in one of claims 20 to 25, **characterised in that** prior to pressing the covering (2, 3) onto the core, a covering lining (21) is inserted between the covering (2, 3) and a press tool and is joined to or formed with the covering (2, 3) and the core (4) by the heat-deformable plastic (17) impregnating the covering (2, 3) so that they move together or are integral in displacement.

27. Device (40) for producing a multi-layered component (1) consisting of a core (4) of flocks (5, 6, 7) of plastic foam (12, 13) joined by a plastic foam (10) of primary material and two coverings (2, 3) disposed on and positively and/or non-positively joined to the core (4) on opposing surfaces thereof and with a fibrous or filamentous substrate (15), comprising a device (62) for conveying the substrate (15) provided with heat-deformable plastic (17) , the conveyor (62) co-operating with a heating device (56) over at least a part-region of its length (63) to melt the heat-deformable plastic (17) and embed the substrate (15) therein, and a compression mould disposed downstream, **characterised in that** the conveyor (62) has two conveyor walls extending parallel and disposed at an adjustable distance from one another, in particular made from Teflon, and a device is arranged between the conveyor (62) and the compression mould for manipulating the substrate (15) of the covering (2, 3) provided with the layer of heat-deformable plastic (17) and/or the core (4) of plastic foam (10, 12, 13).

28. Device for producing a multi-layered component (1) as claimed in claim 27, **characterised in that** at least one of the two mould halves is designed with retaining devices, in particular vacuum slots, for receiving and retaining a top facing (21).

29. Method of reconditioning a multi-layered component (1) comprising a core (4) of a plastic foam (10) of primary material and, optionally, flocks (5, 6, 7) of a plastic foam (12, 13) admixed therewith and joined thereto and having, on at least one surface of the core (4) and positively and/or non-positively joined to the core (4), a covering (2, 3) of a heat-deformable plastic (17) in which a substrate (15) of fibres or filaments is embedded, **characterised in that** the multi-layered component (1) is heated to a temperature of between 150°C and 200°C, at least in the surface regions, as a result of which the covering (2, 3) is drawn out of the core (4).

30. Method as claimed in claim 29, **characterised in that** the heat-deformable plastic (17) in the base element (19, 20) is heated to a temperature in excess of 200°C and is removed from the fibrous or filamentous substrate (15) in the liquid state, in particular is sucked out.

## Revendications

1. Elément de construction multicouche (1) constitué d'un noyau (4) en une mousse de matière synthétique (10) en matériau primaire et le cas échéant, de flocons (5, 6, 7) assemblés avec celui-ci en mousse de matière synthétique (12, 13) et au moins d'une couche de recouvrement (2, 3) disposée sur une surface du noyau (4) et reliée par force et par concordance des formes à celle-ci, avec un corps de support (15) en fibres respectivement fils, **caractérisé en ce que** les fibres respectivement fils du corps de support (15) sont noyés dans une couche (16) en matière synthétique thermoplastique (17) constituant la couche de recouvrement (2, 3) et sont rapportés par formage par celle-ci au moins au noyau (4) et sont reliés par force respectivement par concordance des formes à celui-ci, où la matière synthétique (17), à une température entre 150°C et 200°C, présente une adhésion qui se situe dans la plage entre 5N/5cm et 30N/5cm.

2. Elément de construction multicouche selon la revendication 1, **caractérisé en ce que** le noyau (4) est formé par des flocons (5, 6, 7) d'une mousse de matière synthétique de recyclage respectivement primaire, notamment en des mousses dures respectivement mi-dures et/ou souples.

3. Elément de construction multicouche selon la revendication 1 ou 2, **caractérisé en ce que** les flocons (5, 6, 7) en mousse de matière synthétique de recyclage respectivement primaire sont pourvus de revêtements, notamment en textile, cuir, cuir synthétique ou artificiel respectivement sont recouverts de ceux-ci.

4. Elément de construction multicouche selon l'une ou plusieurs des revendications 1 à 3, **caractérisé en ce que** le noyau (4) contient entre 70% en volume et 95% en volume, de préférence 85% en volume de flocons (5, 6, 7) en mousse de matière synthétique (12, 13).

5. Elément de construction multicouche selon l'une ou plusieurs des revendications 1 à 4, **caractérisé en ce que** 10 à 20% du poids du noyau (4) sont formés par une mousse de matière synthétique (10) en des matériaux primaires, par exemple en polyuréthane.

6. Elément de construction multicouche selon l'une ou plusieurs des revendications 1 à 5, **caractérisé en ce que** le poids spécifique de la mousse de matière synthétique de recyclage ajoutée au noyau (4) est compris entre 20 kg/m³ et 250 kg/m³, de préférence entre 50 kg/m³ et 150 kg/m³.

7. Elément de construction multicouche selon l'une ou plusieurs des revendications 1 à 6, **caractérisé en ce que** le poids spécifique de la mousse de matière synthétique (10) constituée de matériau primaire se situe entre 800 kg/m³ et 1200 kg/m³, et qu'il est de préférence de 1000 kg/m³.

8. Elément de construction multicouche selon l'une ou plusieurs des revendications 1 à 7, **caractérisé en ce que** la mousse de matière synthétique (10) en matériau primaire est mi-dure.

9. Elément de construction multicouche selon l'une ou plusieurs des revendications 1 à 8, **caractérisé en ce que** la couche (16) en matière synthétique thermoplastique (17) est réalisée par du polyéthylène, polyamide, polypropylène, polystyrène, chlorure de polyvinyle, polyimide ou ABS.

10. Elément de construction multicouche selon l'une ou plusieurs des revendications 1 à 9, **caractérisé en ce que** le corps de support (15) est formé par un filet, un tricot ou une nappe en des fibres respectivement fils d'insertion différents (76) où le matériau pour le corps de support (15) est sélectionné dans un groupe comprenant le verre, le métal, le Kewlar, la graphite, le textile, la matière synthétique, la céramique, des fibres naturelles et du carbone.

11. Elément de construction multicouche selon l'une ou plusieurs des revendications 1 à 10, **caractérisé en ce que** le corps de support (15) est réalisé en polyuréthane.

12. Elément de construction multicouche selon l'une ou plusieurs des revendications 1 à 11, **caractérisé en ce que** la matière synthétique thermoplastique (17), sous pression et à une température entre 120°C et 180°C, est au moins visqueuse.

13. Elément de construction multicouche selon l'une ou plusieurs des revendications 1 à 12, **caractérisé en ce qu'**il est disposé sur le corps de support (15) une couche de recouvrement (18), notamment un tricot, un tissu, une nappe ou une feuille et est rapportée par formage respectivement amenée à adhérer par la couche (16) en matière synthétique thermoplastique (17) au corps de support (15).

14. Elément de construction multicouche selon l'une ou plusieurs des revendications 1 à 13, **caractérisé en ce qu'**il est disposé dans le noyau constitué de préférence de plusieurs plaques respectivement entre le noyau (4) et l'élément de support (19, 20) un élément de renforcement (32).

15. Elément de construction multicouche selon l'une ou plusieurs des revendications 1 à 14, **caractérisé en ce qu'**un élément de renforcement (32) est disposé entre le corps de support (15) d'un élément de support (19, 20) et une couche de recouvrement (18, 21) respectivement est noyé de préférence dans la couche (16) de la matière synthétique thermoplastique (17).

16. Elément de construction multicouche selon l'une ou plusieurs des revendications 1 à 15, **caractérisé en ce que** l'élément de support (19, 20) est réalisé comme nappe (74).

17. Elément de construction multicouche selon la revendication 16, **caractérisé en ce que** la nappe (74) est réalisée comme couche désorientée en fils (75) et/ou fils d'insertion (76) respectivement fibres.

18. Elément de construction multicouche selon la revendication 17, **caractérisé en ce que** les fils (75) sont réalisés à partir de matières thermoplastiques, notamment en polypropylène, polyamide, aramide, polyester, PVC, ABS, polyimide, polystyrène et ont une longueur entre 5 et 50 mm.

19. Elément de construction multicouche selon la revendication 17 ou 18, **caractérisé en ce que** les fils d'insertion (76) respectivement fibres sont noyés dans la matière synthétique (17) de la couche (16) et forment le corps de support (15) et ont une longueur comprise entre 20 mm et 80 mm.

20. Procédé de fabrication d'un élément de construction multicouche (1), dans lequel des flocons (5, 6, 7) en une mousse de matière synthétique (12, 13) sont mélangés avec un matériau primaire liquide d'une mousse de matière synthétique (10) et sont formés en une plaque (42) respectivement en un bloc de mousse qui, sous l'effet de la pression et/ou de la température et/ou de l'humidité, est amené à réagir et de ce fait, les flocons (5, 6, 7) en mousse de matière synthétique (12, 13) sont reliés entre eux par la mousse de matière synthétique (10) en matériau primaire, à la suite de quoi est appliqué sur au moins une surface d'une telle plaque (42) ou du bloc de mousse (43) une couche de recouvrement (2, 3) et, sous l'effet de la pression et/ou de la température, le cas échéant avec une déformation spatiale, la couche de recouvrement (2, 3) est assemblée avec la plaque (42) respectivement le bloc de mousse (43) pour former l'élément de construction multicouche (1), **caractérisé en ce que**, avant l'application de la couche de recouvrement sur la plaque (42) respectivement le bloc de mousse (43), on applique sur la couche de recouvrement (2, 3) une matière synthétique thermoplastique (17) qui présente à une température entre 150°C et 200°C une adhésion qui se situe dans la plage entre 5N/5 cm et 30N/5 cm, sur un corps de support (15) en forme de fibres respectivement de fils de celle-ci, qu'ensuite la couche de recouvrement (2, 3) est chauffée avec la matière synthétique thermoplastique (17) au moins suffisamment pour qu'elle devienne visqueuse et noie le corps de support (15), à la suite de quoi la couche de recouvrement (2, 3) est appliquée sur la plaque (42) respectivement le bloc de mousse (43) formant un noyau (4) de l'élément de construction multicouche (1) et est appliquée par pression sur celle-ci pour refouler la matière synthétique thermoplastique (17) dans les zones de surface du noyau (4), et directement ensuite, la couche de recouvrement (2, 3) est refroidie et, après une solidification suffisante et/ou après le passage de la température sous le point de congélation ou le seuil d'écoulement de la matière synthétique thermoplastique (17), l'élément de construction (1) est sorti du moule.

21. Procédé de fabrication d'un élément de construction multicouche (1), dans lequel un matériau primaire liquide, mélangé le cas échéant avec des flocons (5, 6, 7) en une mousse de matière synthétique (12, 13), pour une mousse de matière synthétique (10), est formé en une plaque (42) respectivement en un bloc de mousse (43) qui, sous l'effet de la pression et/ou de la température et/ou de l'humidité, est amené à réagir, et le cas échéant les flocons (5, 6, 7) en mousse de matière synthétique (12, 13) sont ainsi reliés entre eux par la mousse de matière synthétique (10) en matériau primaire, à la suite de quoi on applique sur au moins une surface d'une telle plaque (42) ou du bloc de mousse (43) une couche de recouvrement (2, 3) et celle-ci, sous l'effet de la pression et/ou de la température, le cas échéant avec une déformation spatiale, est reliée à la plaque (42) respectivement au bloc de mousse (43) pour former l'élément de construction multicouche (1), **caractérisé en ce qu'**on utilise pour la couche de recouvrement (2, 3) une nappe en une couche désorientée de fibres (75) en une matière synthétique thermoplastique (17), qui présente à une température entre 150°C et 200°C une adhésion qui se situe dans la plage entre 5N/5cm et 30N/5 cm et des fils d'insertion (76), où les fils (75) fondent par suite du traitement thermique et, en noyant les fils d'insertion (76), forment la couche (16) de la couche de recouvrement (2, 3).

22. Procédé selon la revendication 20 ou 21, **caractérisé en ce que** la couche de recouvrement (2, 3) et/ou le noyau (4) est déformée spatialement simultanément au refoulement de la matière synthétique thermoplastique (17) dans les zones de surface du noyau (4).

23. Procédé selon l'une des revendications 20 à 22, **caractérisé en ce que** le noyau (4) est chauffé avant, respectivement pendant la déformation spatiale des couches de recouvrement (2, 3) et du noyau (4).

24. Procédé selon l'une des revendications 20 à 23, **caractérisé en ce que**, simultanément avec la déformation spatiale de la couche de recouvrement (2, 3), la charpente alvéolaire (22) respectivement la structure alvéolaire du noyau (4) est amenée à craquer thermiquement et est fixée dans la position déformée.

25. Procédé selon l'une des revendications 20 à 24, **caractérisé en ce que** la matière synthétique thermoplastique (17) est chauffée pour la plastification à une température comprise entre 120°C et 180°C.

26. Procédé selon l'une des revendications 20 à 25, **caractérisé en ce qu'**avant l'application par pression de la couche de recouvrement (2, 3) sur le noyau entre la couche de recouvrement (2, 3) et un outil de pression, une couche de recouvrement (21) est insérée, et celle-ci, par la matière synthétique thermoplastique (17) imprégnant la couche de recouvrement (2, 3), est reliée à la couche de recouvrement (2, 3) respectivement au noyau (4) en vue d'un déplacement commun, respectivement d'une manière non déplaçable respectivement est rapportée par formage.

27. Dispositif (40) pour la fabrication d'un élément de construction multicouche (1), constitué d'un noyau (4) en flocons (5, 6, 7) en mousse de matière synthétique (12, 13) reliés par une mousse de matière synthétique (10) en matériau primaire et de deux couches de recouvrement (2, 3) disposées sur des surfaces opposées du noyau (4), reliées à celui-ci par force et/ou par concordance des formes, avec un corps de support (15) en forme de fibres, respectivement de fils, avec un dispositif de convoyage (62) pour le corps de support (15) pourvu de matière synthétique thermoplastique (17), où est associé au dispositif de convoyage (62), au moins sur une zone partielle de sa longueur (63), un dispositif de chauffage (56) pour la fusion de la matière synthétique thermoplastique (17), par quoi le corps de support (15) est noyé dans celle-ci, et un moule de compression est disposé en aval de celui-ci, **caractérisé en ce que** le dispositif de convoyage (62) est formé par deux parois de transport, notamment en Teflon, s'étendant parallèlement l'une à l'autre à un écart réglable l'une au-dessus de l'autre, et qu'il est disposé entre le dispositif de convoyage (62) et le moule de compression un dispositif de manipulation pour le corps de support (15) de la couche de recouvrement (2, 3) pourvu de la couche (16) en matière synthétique thermoplastique (17) et/ou le noyau (4) constitué de mousse de matière synthétique (10, 12, 13).

28. Dispositif de fabrication d'un élément de construction multicouche (1) selon la revendication 27, **caractérisé en ce qu'**au moins l'une des deux moitiés de moule est réalisée avec des dispositifs de retenue, notamment des fentes à vide pour la réception et le maintien d'une couche de recouvrement (21).

29. Procédé de retraitement d'un élément de construction multicouche (1) en un noyau (4) en une mousse de matière synthétique (10) en matériau primaire et le cas échéant de flocons (5, 6, 7) en une mousse de matière synthétique (12, 13) mélangés et reliés le cas échéant à celui-ci et avec une couche de recouvrement (2, 3) en une matière synthétique thermoplastique (17) disposée sur au moins une surface du noyau (4) et reliée par force et par concordance des formes au noyau (4), dans laquelle est noyé un corps de support (15) en fibres, respectivement fils, **caractérisé en ce que** l'élément de construction multicouche (1) est chauffé au moins dans les zones de surface à une température entre 150°C et 200°C, à la suite de quoi la couche de recouvrement (2, 3) est retirée du noyau (4).

30. Procédé selon la revendication 29, **caractérisé en ce que** la matière synthétique thermoplastique (17) est chauffée dans l'élément de support (19, 20) à une température supérieure à 200°C et est retirée, notamment aspirée, à l'état liquide du corps de support (15) en forme de fibres, respectivement de fils.
